(19) Europäisches Patentamt
European Patent Office
Office européen des brevets

(11) EP 3 476 589 B1

(12) # EUROPEAN PATENT SPECIFICATION

(45) Date of publication and mention of the grant of the patent:
**28.07.2021 Bulletin 2021/30**

(21) Application number: **17824139.4**

(22) Date of filing: **29.06.2017**

(51) Int Cl.:
***B32B 33/00*** *(2006.01)* ***B32B 3/30*** *(2006.01)*
***B29D 11/00*** *(2006.01)* ***G02B 5/04*** *(2006.01)*
*B32B 37/24 (2006.01)* *B32B 38/10 (2006.01)*
*G02B 1/14 (2015.01)* *G02B 6/00 (2006.01)*

(86) International application number:
**PCT/JP2017/024055**

(87) International publication number:
**WO 2018/008534 (11.01.2018 Gazette 2018/02)**

(54) **OPTICAL LAMINATE MANUFACTURING METHOD AND OPTICAL LAMINATE INTERMEDIATE BODY**

VERFAHREN ZUR HERSTELLUNG EINES OPTISCHEN LAMINATS UND ZWISCHENKÖRPER EINES OPTISCHEN LAMINATS

PROCÉDÉ DE FABRICATION DE STRATIFIÉ OPTIQUE ET CORPS INTERMÉDIAIRE STRATIFIÉ OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.07.2016 JP 2016132922**

(43) Date of publication of application:
**01.05.2019 Bulletin 2019/18**

(73) Proprietor: **Nitto Denko Corporation**
**Ibaraki-shi, Osaka 567-8680 (JP)**

(72) Inventors:
- **HATTORI Daisuke**
  **Ibaraki-shi**
  **Osaka 567-8680 (JP)**
- **NAKAMURA Kozo**
  **Ibaraki-shi**
  **Osaka 567-8680 (JP)**
- **HOSOKAWA Kazuhiko**
  **Ibaraki-shi**
  **Osaka 567-8680 (JP)**

(74) Representative: **Hoffmann Eitle**
**Patent- und Rechtsanwälte PartmbB**
**Arabellastraße 30**
**81925 München (DE)**

(56) References cited:
**WO-A1-2016/104764**
**JP-A- 2009 061 628**
**JP-A- 2009 199 002**
**JP-A- 2010 015 043**
**JP-A- 2011 123 476**
**JP-A- 2012 206 460**
**JP-A- 2014 046 518**
**JP-A- 2014 174 321**
**JP-A- 2015 173 066**
**JP-A- 2016 512 618**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

TECHNICAL FIELD

The present invention relates to a method for producing an optical laminate and an optical laminate intermediate.

BACKGROUND ART

In an image display such as a liquid crystal display, an optical laminate obtained by laminating a prism sheet and other layers has been proposed (Patent Literatures 1 to 4). Various layers are used as the other layers, and for example, a pressure-sensitive adhesive layer and a low refractive index layer can be laminated (Patent Literatures 3 and 4).

Citation List

Patent Literature

Patent Literature 1: JP 2011-123476 A
Patent Literature 2: JP 2013-235259 A
Patent Literature 3: JP 2015-200865 A
Patent Literature 4: JP 2015-200866 A

Further related art may be found in JP 2011/123476 A relating to a polarizing plate, liquid crystal panel and liquid crystal display device using the polarizing plate and JP 2015 173066 A relating to a backlight device, liquid crystal display device and laminate.

SUMMARY OF INVENTION

Technical Problem

The optical laminate can be produced by a process illustrated in cross-sectional views of FIGs. 9A to 9D, for example. That is, as shown in FIG. 9A, a base layer 10 is provided. Next, as shown in FIG. 9B, prism-shaped asperities (asperities) 10A are formed on a surface of the base layer 10 to produce a prism sheet. Moreover, as shown in FIG. 9C, a protective layer is laminated on the asperities 10A to protect the asperities. Then, as shown in FIG. 9D, a low refractive index layer 20, a pressure-sensitive adhesive/adhesive layer 30, and a protective layer (separator) 40 are laminated on a surface of the prism sheet (base layer) 10 opposite to the surface on which the asperities 10A are formed to produce an optical laminate intermediate. The protective layer 40 is peeled off from this optical laminate intermediate of FIG. 9D, and one or more other layers (e.g., optical functional layers such as polarizing plate, light diffusion layer) are thereafter laminated on the pressure-sensitive adhesive/adhesive layer 30. A desired optical laminate thus can be produced.

However, the base layer 10 has a small thickness (is thin) and thus may be deformed by being crumpled with a force applied at the time of shaping into asperities (prism-shaped asperities) 10A. It is therefore difficult to finely provide asperities on a thin base.

In order to solve this problem, for example, a method using a reinforcement layer (protective film) can be considered as shown in the cross-sectional views of FIGs. 10A to 10D. The process in FIGs. 10A to 10D is the same as that in FIGs. 9A to 9D except that a reinforcement layer (protective film) 13 is used and is adhered to the base layer 10. Specifically, first, as shown in FIG. 10A, a base layer 10 having a surface on which a reinforcement layer 13 has been adhered is provided. Next, as shown in FIG. 10B, prism-shaped asperities (asperities) 10A are formed on a surface of the base layer 10 opposite to the surface on which the reinforcement layer 13 has been adhered to produce a prism sheet. Moreover, as shown in FIG. 10C, a protective layer 12 is laminated on the asperities 10A to protect the asperities. Then, the reinforcement layer 13 is peeled off, and as shown in FIG. 10D, an optical laminate intermediate is produced in the same manner as in FIG. 9D. The reinforcement layer (protective film) 13 functions to increase the strength of the thin base layer 10 by raising the thickness thereof and to prevent the base layer 10 from being deformed at the time when the asperities (prism-shaped asperities) 10A are provided thereon.

However, the reinforcement layer (protective film) 13 has to be peeled off and discarded at the time of producing an optical laminate intermediate, whereby the cost increases.

Hence, the present invention is intended to provide a method for producing an optical laminate and an optical

laminate intermediate, capable of finely providing asperities on a thin base layer.

Solution to Problem

The present invention is defined by the appended independent claims. The dependent claims describe optional features and preferred embodiments.

In order to achieve the aforementioned object, the present invention provides a method for producing an optical laminate including the steps of: laminating a pressure-sensitive adhesive/adhesive layer and a protective layer on a base layer in this order; and after the step of laminating, providing asperities on a surface of the base layer opposite to a surface on which the pressure-sensitive adhesive/adhesive layer is laminated.

The present invention also provides an optical laminate intermediate including: a base layer; a pressure-sensitive adhesive/adhesive layer; and a protective layer, the pressure-sensitive adhesive/adhesive layer and the protective layer being laminated on the base layer in this order, wherein the optical laminate intermediate is for use in production of an optical laminate by providing asperities on a surface of the base layer opposite to a surface on which the pressure-sensitive adhesive/adhesive layer is laminated.

Advantageous Effects of Invention

The present invention can provide a method for producing an optical laminate and an optical laminate intermediate, capable of finely providing asperities on a thin base layer at low cost.

BRIEF DESCRIPTION OF DRAWINGS

[FIG. 1] FIGs 1A to 1E are cross-sectional views schematically illustrating an example of a process of a method for producing an optical laminate according to the present invention.

[FIG. 2] FIGs 2A to 2F are cross-sectional views schematically illustrating another example of a process of the method for producing an optical laminate according to the present invention.

[FIG. 3] FIG. 3 shows cross-sectional views schematically illustrating an example of a process of a method for producing an optical laminate intermediate according to the present invention.

[FIG. 4] FIG. 4 is a schematic view showing an example of an apparatus used in the method shown in FIG. 3.

[FIG. 5] FIG. 5 is a schematic view showing another example of an apparatus used in the method shown in FIG. 3.

[FIG. 6] FIG. 6 shows cross-sectional views schematically illustrating another example of a process of the method for producing an optical laminate intermediate according to the present invention.

[FIG. 7] FIG. 7 is a schematic view showing an example of an apparatus used in the method shown in FIG. 6.

[FIG. 8] FIG. 8 is a schematic view showing another example of an apparatus used in the method shown in FIG. 6.

[FIG. 9] FIGs. 9A to 9D are cross-sectional views schematically illustrating an example of a process of a method for producing an optical laminate intermediate according to the present invention.

[FIG. 10] FIGs. 10A to 10D are cross-sectional views schematically illustrating another example of a process of a method for producing an optical laminate intermediate according to the present invention.

DESCRIPTION OF EMBODIMENTS

The present invention is described in detail below with reference to examples. It is to be noted, however, that the present invention is by no means limited by the following descriptions.

In the method for producing an optical laminate according to the present invention, the asperities may be, for example, prism-shaped asperities.

In the method for producing an optical laminate according to the present invention, the base layer before the step of providing asperities may have, for example, a thickness in the range from 1 to 100 μm or from 1 to 50 μm.

For example, in the step of laminating in the method for producing an optical laminate according to the present invention, an optical functional layer may be laminated on the base layer, and the pressure-sensitive adhesive/adhesive layer and the protective layer may be laminated on the base layer via the optical functional layer.

For example, in the method for producing an optical laminate according to the present invention, the optical functional layer may be formed using at least one method selected from the group consisting of coating, transfer, sputtering, and vapor deposition.

In the method for producing an optical laminate according to the present invention, the optical functional layer is a low refractive index layer having a refractive index of 1.3 or less, optionally 1.25 or less.

For example, in the step of laminating in the method for producing an optical laminate according to the present invention, an undercoat layer may be laminated on the base layer, and the optical functional layer may be laminated on the undercoat layer. Moreover, for example, the undercoat layer may have a thickness in the range from 10 to 300 nm.
For example, in the method for producing an optical laminate according to the present invention, the thickness of the base layer in an optical laminate intermediate before the step of laminating and after the step of providing asperities may be 60% or less of the thickness of the entire optical laminate intermediate.
For example, in the method for producing an optical laminate according to the present invention, the thickness of the optical laminate intermediate before the step of laminating and after the step of providing asperities may be in the range from 40 to 200 $\mu$m.
For example, in the method for producing an optical laminate according to the present invention, the base layer may be a long base layer, and in the step of laminating, the layers other than the base layer may be continuously formed on the base layer.
In the optical laminate intermediate according to the present invention, the asperities may be, for example, prism-shaped asperities.
For example, in the optical laminate intermediate according to the present invention, the base layer may have a thickness in the range from 1 to 100 $\mu$m or from 1 to 50 $\mu$m.
For example, in the optical laminate intermediate according to the present invention, an optical functional layer may be laminated on the base layer, and the pressure-sensitive adhesive/adhesive layer and the protective layer may be laminated on the base layer via the optical functional layer.
In the optical laminate intermediate according to the present invention, the optical functional layer is a low refractive index layer having a refractive index of 1.3 or less, optionally 1.25 or less.
For example, in the optical laminate intermediate according to the present invention, an undercoat layer may be laminated on the base layer, and the optical functional layer may be laminated on the undercoat layer. Moreover, for example, the undercoat layer may have a thickness in the range from 10 to 300 nm.
For example, in the optical laminate intermediate according to the present invention, the thickness of the base layer may be 60% or less of the thickness of the entire optical laminate intermediate.
For example, in the optical laminate intermediate according to the present invention, the thickness of the entire optical laminate intermediate may be in the range from 40 to 200 $\mu$m.
The optical laminate intermediate according to the present invention may be, for example, long.
The embodiments of the present invention are described in further detail below with reference to examples. It is to be noted, however, that the present invention is by no means limited by the following embodiments.

(1. Method for producing optical laminate)

(1) Each step in method for producing optical laminate

An example of the method for producing an optical laminate according to the present invention is described below with reference to the cross-sectional views of FIGs. 1A to IE.
First, as shown in FIG. 1A, a base layer 10 is provided. Then, as shown in FIG. 1B, a low refractive index layer 20, a pressure-sensitive adhesive/adhesive layer 30, and a protective layer (separator) 40 are laminated on the base layer 10 in this order (step of laminating). The pressure-sensitive adhesive/adhesive layer 30 may be laminated by forming a pressure-sensitive adhesive/adhesive layer through applying (coating) a pressure-sensitive adhesive or an adhesive. Alternatively, a pressure-sensitive adhesive tape including the pressure-sensitive adhesive/adhesive layer 30 may be adhered (attached) to simultaneously laminate the pressure sensitive adhesive/adhesive layer 30 and the protective layer 40.
The structure shown in FIG. 1B is an example of the structure of the optical laminate intermediate according to the present invention. Then, as shown in FIG. 1C, asperities 10A are provided on a surface of the base layer 10 opposite to a surface on which the low refractive index layer 20, the pressure-sensitive adhesive/adhesive layer 30, and the protective layer 40 are laminated (step of providing asperities). The asperities 10A are prism-shaped asperities in FIG. 1C. As mentioned above, for example, in the present invention, the thickness of the base layer before providing asperities may be 60% or less of the thickness of the entire optical laminate intermediate. The thickness of the base layer before providing asperities may be, for example, 50% or less, 45% or less, or 40% or less or may be, for example, 3% or more, 5% or more, or 10% or more relative to the thickness of the entire optical laminate intermediate.
Moreover, as shown in FIG. 1D, a protective layer 12 is laminated on the asperities 10A to protect the asperities 10A. Lamination of the protective layer 12 is optional and may or may not be performed as required. Then, as shown in FIG. IE, the protective layer (separator) 40 is peeled off, and a brightness enhancement film 50, a light diffusion layer 60, and a polarizing plate 70 are then laminated on the pressure-sensitive adhesive/adhesive layer 30 in this order. A desired optical laminate thus is produced. The light diffusion layer 60 may be formed with, for example, a light diffusible

pressure-sensitive adhesive.

As mentioned above, the method for producing an optical laminate according to the present invention includes the steps of: laminating a pressure-sensitive adhesive/adhesive layer and a protective layer on a base layer in this order; and after the step of laminating, providing asperities on a surface of the base layer opposite to a surface on which the pressure-sensitive adhesive/adhesive layer is laminated. In the step of laminating, "laminating a pressure-sensitive adhesive/adhesive layer and a protective layer on a base layer in this order" means that each layer can be laminated directly without another layer or may be laminated via any other layers. For example, as shown in FIG. 1, the pressure-sensitive adhesive/adhesive layer 30 may be laminated on the base layer 10 via the low refractive index layer 20.

A method for performing the step of laminating is not limited to particular methods, and the step of laminating may be performed according to a commonly used method for producing an optical laminate, for example. Moreover, a method for providing asperities in the step of providing asperities also is not limited to particular methods, and as mentioned below, asperities may be provided according to the method for producing a commonly used optical element having asperities (e.g., a prism sheet).

For example, in the present invention, the pressure-sensitive adhesive/adhesive layer and the protective layer are laminated on the base layer in the step of laminating prior to the step of providing asperities, to increase the thickness. With this configuration, the adhesion of a thin base layer which alone is deformed, for example, creased by being crumpled with a force applied at the time of shaping is increased, whereby the base layer is difficult to be deformed. Accordingly, asperities can be finely provided on a thin base layer at low cost.

In the step of laminating in the method for producing an optical laminate according to the present invention, the protective layer is not limited to particular layers. Specifically, for example, the protective layer is not limited to a layer removed from the pressure-sensitive adhesive/adhesive layer such as the protective layer (separator) 40 in FIG. 1 and may be a layer used while being laminated on the pressure-sensitive adhesive/adhesive layer. For example, one or more optical functional layers (e.g., the brightness enhancement film 50, the light diffusion layer 60, the polarizing plate 70 shown in FIG. 1) are laminated on the pressure-sensitive adhesive/adhesive layer, the step of providing asperities may be performed using the layers as the protective layer.

For example, the method for producing an optical laminate according to the present invention may or may not further include any other steps besides the step of laminating and the step of providing asperities. The any other steps can be, for example, steps described using FIGs. 1D and IE.

Moreover, for example, in the step of laminating, an undercoat layer may be laminated on the base layer, and an optical functional layer such as the low refractive index layer may be laminated on the undercoat layer. With the undercoat layer, the adhesion between the base layer and the optical functional layer such as the low refractive index layer can be increased, for example. Specifically, for example, the process is performed as in the cross-sectional views of FIGs. 2A to 2F. In FIGs. 2A to 2F, first, as shown in FIG. 2A, a base layer 10 is provided in the same manner as in FIG. 1A. Then, as shown in FIG. 2B, an undercoat layer 11 is laminated on the base layer 10 by coating. Further, the process shown in FIGs. 2C to 2F is performed in the same manner as in FIGs. 1B to 1E except that the low refractive index layer 20 is laminated on the undercoat layer 11. The structure shown in FIG. 2C is another example of the structure of the optical laminate intermediate according to the present invention, different from the example in FIG. 1B.

A method for coating the base layer with the undercoat layer 11 is not limited to particular methods, and examples thereof include coating with a slot die, coating with various gravure coaters, coating with a bar coater, coating with a kiss coater, and spraying with a spray. Specific examples of the material and the method for forming the undercoat layer 11 per se are described below.

Next, the components of the optical laminate produced by the method for producing an optical laminate according to the present invention (hereinafter also referred to as the "optical laminate according to the present invention") are described below with reference to examples.

(2) Base layer and asperities

The use, the function, and the shape of the base layer 10 and the asperities 10A provided on the surface thereof are not limited to particular use, functions, and shapes, and may be the same as or based on those of the commonly used optical element having asperities. The optical element having asperities is not limited to particular elements, and examples thereof include a prism sheet, a lenticular lens, and a microlens array. Examples of the prism sheet include prism sheets described in Patent Literatures 1 to 4.

The thickness of the base layer 10 is not limited to particular thicknesses and can be, for example, before providing the asperities 10A, 10 μm or more, 5 μm or more, 10 μm or more, or 20 μm or more and can be, for example, 100 μm or less, 75 μm or less, 50 μm or less, or 40 μm or less. For the ease of handling such as conveying, the thickness of the base layer 10 is preferably not too small, and for the reduction in thickness of the optical laminate, the thickness is preferably not too large.

The base layer 10 is not limited to particular layers and is, for example, a resin film. A material for forming the

base layer 10 also is not limited to particular materials and can be selected, as appropriate, and only one type of the material may be used, or two or more types of the materials may be used in combination. The material for forming the base layer 10 can be, for example, a light-transmissive thermoplastic resin, and more specific examples thereof include: cellulose-based resins such as triacetylcellulose (TAC); acrylic resins such as polymethyl methacrylate (PMMA) and methylmethacrylate-styrene copolymer resin (MS); polyester resins such as polyethylene terephthalate (PET); and cyclic polyolefin resins such as polynorbornene, and polycarbonate (PC) resins.

A portion of the base layer 10 on which the asperities 10A are formed may be integrated into the base layer 10 or may be another member. For example, the asperities 10A may be provided by forming asperities 10A directly on a member that constitutes a main body of the base layer 10 or by laminating another member having asperities 10A on the main body of the base layer 10. A method for providing or forming asperities 10A is not limited to particular methods and may be, for example, the same as or based on the method for providing or forming asperities on an optical element such as a commonly used prism sheet or lenticular lens. When asperities 10A are a member different from the main body of the base layer, the material for forming the asperities 10A is not limited to particular materials, and examples thereof include reactive resins (e.g., ionizing radiation curable resins) such as epoxy-based resins and urethane-based resins. Only one type of the material may be used, or two or more types of the materials may be used in combination.

The main body of the base layer 10 may substantially have, for example, optical isotropy. In the present invention, the optical element "substantially has optical isotropy" means that the retardation value is small to the extent that optical characteristics of image display or the like are not substantially affected. For example, the in-plane retardation Re of the main body of the base layer 10 is 20 nm or less or 10 nm or less. The in-plane retardation Re is a retardation value in a plane, measured with light at a wavelength of 590 nm at 23°C. The in-plane retardation Re is represented by $Re = (nx - ny) \times t$. nx represents a refractive index of the optical element in a direction of the maximum refractive index in a plane of the optical element (e.g., a slow axis direction), ny represents a refractive index of the optical element in a direction perpendicular to the slow axis in the plane (i.e., a fast axis direction), and t represents the thickness (nm) of the optical element.

Each of the asperities 10A in FIG. 1 has a prism shape. The shape, however, is not limited thereto, and the asperities 10A may have, for example, the same shape as a commonly used prism sheet, lenticular lens, or microlens array. Specific examples of the shape of the asperities 10A include a concave lens shape, convex lens shape, a substantially semi-cylindrical shape (hemi-cylindrical shape), gabled roof shape (a shape having triangle cross section), and a prism having a convex polygonal shaped cross section.

The function and the use of the base layer 10 including the asperities 10A formed thereon is not limited to particular functions and use as mentioned above and can be the same as those of a prism sheet, a lenticular lens, or a microlens array. When the base layer 10 including the asperities 10A formed thereon is used as a prism sheet, the function and the use thereof are, for example, as described below although the use and the function thereof are not limited to particular use and functions. Specifically, for example, when an optical laminate according to the present invention is disposed on the backlight side of a liquid crystal display, the optical laminate guides polarized light emitted from a light guide plate of a backlight unit to optical elements such as a reflective polarizer and polarizing plate as polarized light having the maximum intensity in an almost normal direction of the liquid crystal display by total reflection of the polarized light in the asperities (prism shape) 10A while maintaining the polarization state. The "almost normal direction" encompasses a direction within a predetermined angle with respect to the normal direction, e.g., a direction within the range of the angle ±10° with respect to the normal direction.

When each of the asperities 10A has a prism shape, the "prism shape" is not limited to particular shapes and is, for example, as follows. Specifically, the prism shape may refer to a triangular shape of a cross section that is parallel with its alignment direction and its thickness direction or may refer to another shape (e.g., a shape where one or both oblique surfaces have a plurality of flat faces with different angles of inclination). The triangular shape may be a shape which is asymmetrical to a line that passes through a vertex of a unit prism and is orthogonal to a sheet surface (e.g., a scalene triangle) or a shape which is symmetrical to the line (e.g., an isosceles triangle). Further, each vertex of the unit prism may be rounded by chamfering or has a trapezium cross section by cutting the vertex so as to be flat. The detail of the prism shape can be set appropriately according to the intention. As the prism shape, a configuration described in JP H11-84111 A can be used, for example.

(3) Pressure-sensitive adhesive/adhesive layer, protective layer, and other layers

The pressure-sensitive adhesive/adhesive layer 30 is not limited to particular layers and can be, for example, a commonly used pressure-sensitive adhesive layer or adhesive layer. In the present invention, the terms "pressure-sensitive adhesive" and "pressure-sensitive adhesive layer" respectively refer to an agent and a layer that adhere a substance in a peelable manner, for example. In the present invention, the terms "adhesive" and "adhesive layer" respectively refer to an agent and a layer that adhere a substance in a non-peelable manner, for example. It is to be noted, however, that, in the present invention, the "pressure-sensitive adhesive" and the "adhesive" are not always

clearly distinguishable from each other, and also, the "pressure-sensitive adhesive layer" and the "adhesive layer" are not always clearly distinguishable from each other. In the present invention, a pressure-sensitive adhesive or an adhesive for forming the pressure-sensitive adhesive/adhesive layer is not limited to particular adhesives, and a commonly used pressure-sensitive adhesive or adhesive can be used, for example. Examples of the pressure-sensitive adhesive or the adhesive include: polymer adhesives such as acrylic adhesives, vinyl alcohol adhesives, silicone adhesives, polyester adhesives, polyurethane adhesives, and polyether adhesives; and rubber adhesives. Examples of the pressure-sensitive adhesive or the adhesive further include adhesives composed of water-soluble crosslinking agent for vinyl alcohol-based polymers, such as glutaraldehyde, melamine, and oxalic acid. Only one type of pressure-sensitive adhesive and adhesive may be used, or two or more types of pressure-sensitive adhesives or adhesives may be used in combination (e.g., they may be mixed together or may be laminated). The thickness of the pressure-sensitive adhesive/adhesive layer is not limited to particular thicknesses and is, for example, from 0.1 to 100 μm, from 5 to 50 μm, from 10 to 30 μm, or from 12 to 25 μm.

The protective layer (separator) 40 is not limited to particular layers and may be the same as the protective layer (separator) for protecting a layer of a commonly used pressure-sensitive adhesive or adhesive. The protective layer (separator) 40 is, for example, a resin film, and specific examples thereof include a polyethylene film having a silicon-treated surface, and a polyester-based film having a silicon-treated surface. The thickness of the protective layer (separator) 40 also is not limited to particular thicknesses and is, for example, 3 μm or more, 5 μm or more, or 10 μm or more and is, for example, 150 μm or less, 100 μm or less, or 80 μm or less. Specifically, as mentioned above, in the step of laminating in the method for producing an optical laminate according to the present invention, the protective layer is not limited to a layer removed from the pressure-sensitive adhesive/adhesive layer such as the protective layer (separator) 40 in FIGs. 1 and 2 and may be a layer used while being laminated on the pressure-sensitive adhesive/adhesive layer (e.g., the brightness enhancement film 50, the light diffusion layer 60, or the polarizing plate 70 shown in FIGs. 1 and 2).

The layers other than the pressure-sensitive adhesive/adhesive layer and the protective layer are optional layers in the method for producing an optical laminate, the optical laminate intermediate, and the optical laminate according to the present invention. For example, the optical laminate according to the present invention may or may not include the undercoat layer 11, the low refractive index layer 20, the brightness enhancement film 50, the light diffusion layer 60, and the polarizing plate 70 shown in FIGs. 1 and 2, and these layers may be replaced with any other layer(s). Specifically, one or more other optical functional layer and pressure-sensitive adhesive/adhesive layer can be used in addition to or in place of the brightness enhancement film 50, the light diffusion layer 60, and the polarizing plate 70.

The undercoat layer 11 is not limited to particular layers, and examples thereof include a silane coupling agent layer and a urethane layer. A coating solution for forming the undercoat layer 11 can be produced by, for example, hydrolyzing a silane coupling agent to prepare an aqueous solution and thereafter mixing the aqueous solution with an organic solvent which is compatible with water. The thickness of the undercoat layer 11 also is not limited to particular thicknesses and is, for example, 10 nm or more, 20 nm or more, or 50 nm or more and is, for example, 300 nm or less, 200 nm or less, or 100 nm or less.

The brightness enhancement film 50, the light diffusion layer 60, and the polarizing plate 70 are not limited to particular layers, and for example, a commonly used brightness enhancement film, light diffusion layer, and polarizing plate can be used. The light diffusion layer 60 may be formed of, for example, a light diffusible pressure-sensitive adhesive, as mentioned above.

Next, the low refractive index layer 20 is not limited to particular layers and can be, for example, as follows.

The "refractive index" of a given medium generally refers to the ratio of transmission speed of the wavefront of light in vacuum to the phase velocity of the light in the medium. The refractive index of the low refractive index layer in the method for producing an optical laminate, the optical laminate intermediate, and the optical laminate according to the present invention (hereinafter also referred to as "the low refractive index layer according to the present invention") is not limited to particular refractive indexes. The upper limit thereof is 1.3 or less, and optionally less than 1.3, 1.25 or less, 1.2 or less, or 1.15 or less. The lower limit thereof is, for example, 1.05 or more, 1.06 or more, or 1.07 or more. The range thereof is, for example, 1.05 or more and 1.3 or less, 1.05 or more and less than 1.3,and optionally 1.05 or more and 1.25 or less, 1.06 or more and less than 1.2, and 1.07 or more and 1.15 or less.

In the present invention, the refractive index refers to the one measured at a wavelength of 550 nm, unless otherwise stated. The method for measuring the refractive index is not limited to particular methods. For example, the refractive index can be measured by the following method.

(Evaluation of refractive index)

The low refractive index layer according to the present invention is formed on a base layer (e.g., an acrylic film), and the obtained laminate is then cut into a piece with a size of 50 mm × 50 mm. The thus-obtained cut piece is adhered onto a surface of a glass plate (thickness: 3 mm) with a pressure-sensitive adhesive layer. The central portion

(diameter: about 20 mm) of the back surface of the glass plate is painted entirely with a black magic marker, thereby preparing a sample that allows no reflection at the back surface of the glass plate. The sample is set in an ellipsometer (VASE, manufactured by J. A. Woollam Japan), and the refractive index is measured at a wavelength of 500 nm and at an incidence angle of 50° to 80°. The mean value of the thus-obtained measured values is set as the refractive index.

As shown in FIG. 9 or 10, it is difficult to accurately measure (for example, a refractive index) of a low refractive index layer 20 by a method where the low refractive index layer 20 is laminated after forming asperities 10A on a base layer 10. Specifically, incident light does not travel in straight lines because of being refracted with asperities (e.g., a prism shape). It is thus difficult to accurately measure optical characteristics of the low refractive index layer. In contrast, for example, when the low refractive index layer is laminated before forming asperities on the base layer in the present invention, optical characteristics (e.g., the refractive index) of the low refractive index layer are easily measured without interference with the asperities. The present invention thus can easily control quality of the low refractive index layer.

The low refractive index layer according to the present invention may have, for example, a porous structure. The porous structure may be produced from gel pulverized products, for example. The low refractive index layer is described in further detail below.

In order to produce the low refractive index layer according to the present invention, a gel pulverized product-containing liquid that is a raw material of the low refractive index layer (hereinafter also merely referred to as a "gel pulverized product-containing liquid") may be produced, for example. The method for producing the gel pulverized product-containing liquid includes, for example, gel production step of producing a gel, solvent replacement step of replacing a solvent in the gel with another solvent, and gel pulverization step of pulverizing the gel in the another solvent. The gel pulverization step may be performed by one or multiple pulverization stages. When the gel pulverization step is performed by multiple pulverization stages, the number of the pulverization stages is not limited to particular numbers and may be, for example, two, three or more. Moreover, for example, the method for producing the gel pulverized product-containing liquid may further include a concentration adjustment step of adjusting the concentration of a liquid containing the gel (hereinafter also referred to as the "gel-containing liquid") before the first pulverization step and after the solvent replacement step. Moreover, for example, it is preferred that the concentration of the gel-containing liquid is not adjusted after the first pulverization step. The present invention, however, is by no means limited thereto.

In the method for producing a gel pulverized product-containing liquid, the multiple pulverization stages may include, for example, first and second pulverization stages of pulverizing a gel. For example, the first pulverization stage may be a stage where the gel is pulverized into particles with a volume average particle diameter of 0.5 to 100 μm. Moreover, for example, the second pulverization stage may be a stage where the particles after the first pulverization stage may further be pulverized into particles with a volume average particle diameter of 10 to 1000 nm. When the pulverization step is performed by multiple pulverization stages, the pulverization stages may include, for example, another pulverization stage(s) besides first and second pulverization stages.

In the present invention, the shape of the "particle" (e.g., the particle of the gel pulverized product) is not limited to particular shapes and may be, for example, a spherical shape or non-spherical shape. In the present invention, the particle of the gel pulverized product may be, for example, a sol-gel beaded particle, a nanoparticle (hollow nanosilica/nanoballoon particle), or a nanofiber.

In the present invention, for example, the gel is preferably a porous gel, and the gel pulverized product is preferably porous gel pulverized product. The present invention, however, is by no means limited thereto.

In the present invention, the gel pulverized product may be in at least one form selected from particulate forms, fibrous forms, and plate-like forms, for example. The particulate structural unit and the plate-like structural unit may be made of an inorganic substance, for example. The constituent element(s) of the particulate structural units includes at least one element selected from the group consisting of Si, Mg, Al, Ti, Zn, and Zr, for example. The particulate structure (structural unit) may be a solid particle or a hollow particle, and specific examples thereof include silicone particles, silicone particles having micropores, silica hollow nanoparticles, and silica hollow nanoballoons. The fibrous structural unit may be, for example, a nanofiber with a nano-sized diameter, and specific examples thereof include cellulose nanofibers and alumina nanofibers. The plate-like structural unit may be, for example, nanoclay, and specific examples thereof include nano-sized bentonite (e.g., Kunipia F (trade name)). The fibrous structural unit is not particularly limited, and may be, for example, at least one fibrous substance selected from the group consisting of carbon nanofibers, cellulose nanofibers, alumina nanofibers, chitin nanofibers, chitosan nanofibers, polymer nanofibers, glass nanofibers, and silica nanofibers.

The gel pulverization step (e.g., the first pulverization step and the second pulverization step) can be performed in the "another solvent" as mentioned above, for example. The "another solvent" is described in detail below.

In the present invention, the "solvent" (e.g., a solvent for production of gel, a solvent for production of void-containing structure film, a solvent for replacement) may not dissolve a gel or pulverized products thereof, the gel or the pulverized products thereof may be dispersed or precipitated in the solvent.

The volume average particle diameter of the gel after the first pulverization stage may be, for example, from 0.5 to 100 μm, from 1 to 100 μm, from 1 to 50 μm, from 2 to 20 μm, or from 3 to 10 μm. The volume average particle

diameter of the gel after the second pulverization stage may be, for example, from 10 to 1000 nm, from 100 to 500 nm, or from 200 to 300 nm. The volume average particle diameter indicates a variation in particle size of the pulverized products in the liquid containing the gel (gel-containing liquid). The volume average particle diameter can be measured with a particle size distribution analyzer based on dynamic light scattering, laser diffraction, or the like, or using an electron microscope such as a scanning electron microscope (SEM) or a transmission electron microscope (TEM), for example.

The shear velocity in the liquid immediately after the first pulverization stage may be, for example, 50 mPa·s or more, 1000 mPa·s or more, 2000 mPa·s or more, or 3000 mPa·s or more and may be, for example, 100 Pa·s or less, 50 Pa·s or less, or 10 Pa·s or less, at a shear rate of 1000 1/s. The shear velocity in the liquid immediately after the second pulverization stage may be, for example, 1 mPa·s or more, 2 mPa·s or more, or 3 mPa·s or more and may be, for example, 1000 mPa·s or less, 100 mPa·s or less, or 50 mPa·s or less. The method for measuring the shear viscosity is not limited to particular methods, and for example, as described in the examples mentioned below, the shear viscosity can be measured using a vibration-type viscometer (trade name: FEM-1000V, manufactured by SEKONIC CORPORATION).

After the first pulverization stage, for example, the shear velocity of a liquid containing the particles is 50 mPa·s or more, and the volume average particle diameter of the particles may be from 0.5 to 50 $\mu$m.

In the concentration adjustment step of the method for producing a gel pulverized product-containing liquid, the concentration of the gel in the gel-containing liquid may be adjusted to, for example, 1 wt% or more, 1.5 wt% or more, 1.8 wt% or more, 2.0 wt% or more, or 2.8 wt% or more and may be adjusted to, for example, 5 wt% or less, 4.5 wt% or less, 4.0 wt% or less, 3.8 wt% or less, or 3.4 wt% or less. In the concentration adjustment step, the concentration of the gel in the gel-containing liquid may be adjusted to, for example, from 1 to 5 wt%, from 1.5 to 40 wt%, from 2.0 to 3.8 wt%, or from 2.8 to 3.4 wt%. From the viewpoint of the ease of handling of the gel in the gel pulverization step, the concentration of the gel is preferably not too high to prevent the viscosity of the gel from being too high. From the viewpoint of using the gel-containing liquid as a coating solution described below, the concentration of the gel is preferably not too low to prevent the viscosity of the gel from being too low. The concentration of the gel in the gel-containing liquid can be calculated by, for example, measuring the weight of the gel-containing liquid and the weight of the solid content (gel) after removing a solvent from the gel-containing liquid and dividing the latter measurement value by the former measurement value.

In the concentration adjustment step, for example, the concentration of the gel in the gel-containing liquid may be decreased by adding a solvent or may be increased by volatilizing a solvent to appropriately adjust the concentration. In the concentration adjustment step, for example, when the measured concentration of the gel in the gel-containing liquid is appropriate, the gel-containing liquid per se may be applied to a subsequent step without increasing or decreasing the concentration (adjustment of the concentration). In the concentration adjustment step, for example, when the concentration of the gel in the gel-containing liquid is obviously appropriate without measurement, the gel-containing liquid per se may be applied to a subsequent step without any measurement and adjustment of the concentration.

In the gel pulverization step, the rate of change in concentration of the gel in the gel-containing liquid in terms of wt% from immediately before the first pulverization stage to immediately after the last pulverization stage is, for example, $\pm$3% or less, $\pm$2.8% or less, $\pm$2.6% or less, $\pm$2.4% or less, or $\pm$2.2% or less.

The method for producing a gel pulverized product-containing liquid preferably further includes a gel form control step of controlling the form and the size of the gel prior to the solvent replacement step. In the gel form control step, the size of the gel is preferably controlled not to be too small. When the size of the gel is not too small, the large amount of the solvent is adhered to the periphery of the gel pulverized finely, whereby problems where the measured concentration of the solvent is lower than the actual concentration, higher than the same because the solvent remains, or varies widely can be easily prevented. When the size of the gel is not too large before the solvent replacement step, the solvent replacement efficiency is favorable. Moreover, in the gel form control step, the size of each gel is preferably controlled to be almost uniform. When the size of each gel is almost uniform, variations in particle diameter, concentration of the gel, and the like among lots of the gel pulverized product-containing liquid can be prevented, and a gel pulverized product-containing liquid having excellent uniformity can be easily obtained.

In the gel form control step, the length of the minor axis of the gel may be controlled to be, for example, 0.5 cm or more, 0.6 cm or more, 0.7 cm or more, or 0.8 cm or more and may be controlled to be, for example, 15 cm or less, 13 cm or less, 10 cm or less, or 8 cm or less. In the gel form control step, the length of the major axis of the gel may be controlled to be, for example, 30 cm or less, 28 cm or less, 25 cm or less, or 20 cm or less and may be controlled to be, for example, 1 cm or more, 2 cm or more, 3 cm or more, 4 cm or more, or 5 cm or more. In the present invention, the length of the "minor axis" of a solid (3D solid) refers to the measured length of a portion having the measurable shortest length in the solid. In the present invention, the length of the "the major axis" of a solid (3D solid) refers to the measured length of a portion having the measurable longest length in the solid.

In the gel form control step, the shape of the gel is not limited to particular shapes, and the shape is only required to be controlled to be, for example, rectangular (including cubic), cylindrical, a polygonal prism (e.g., triangular prism,

hexagonal prism), spherical, or ellipsoidal (e.g, a rugby ball-like shape). Moreover, in the gel form control step, the shape of the gel is controlled to be preferably rectangular or almost rectangular because of the simplicity. When the shape of the gel is controlled to be rectangular in the gel form control step, the length of the short side may be controlled to be, for example, 0.5 cm or more, 0.6 cm or more, 0.7 cm or more, or 0.8 cm or more or may be controlled to be, for example, 15 cm or less, 13 cm or less, 10 cm or less, or 8 cm or less. When the shape of the gel is controlled to be rectangular in the gel form control step, the length of the long side may be controlled to be, for example, 30 cm or less, less than 30 cm, 28 cm or less, 25 cm or less, or 20 cm or less or may be controlled to be, for example, 1 cm or more, 2 cm or more, 3 cm or more, 4 cm or more, or 5 cm or more. In the present invention, the "short side" of the rectangular solid refers to a side having the shortest length, and the "long side" refers to a side having the longest length.

The gel form control step may be performed after or during (in parallel with) the gel production step, for example. More specifically, the gel form control step is performed as follows, for example.

In the gel form control step, the gel may be controlled to be a solid by cutting the gel in the state of being immobilized, for example. When the gel has really high brittleness, the gel may be non-uniformly crumbled with no relation to the cutting direction of the gel. Hence, the pressure in the compressing direction applied at the time when the gel is cut is applied uniformly to the gel by immobilizing the periphery of the gel, whereby the gel can be cut uniformly in the cutting direction. For example, the gel may be cut as follows. The shape of the gel before the solvent replacement step is almost rectangular, and in the gel form control step, the gel is immobilized by bringing five out of six surfaces of the almost rectangular gel into contact with other substance, and in the state where the other surface is exposed, a cutting tool is inserted into the gel from the exposed surface. The cutting tool is not limited to particular tools, and examples thereof include a knife, a tool having a wire-like thin shape, and a tool having a thin, sharp, plate-like shape. Further, the gel may be cut in the other solvent, for example.

In the gel form control step, the gel may be controlled to be a solid by solidifying a raw material of the gel in a mold (container) in size corresponding to the shape and the size of the solid, for example. Thus, even when the gel has really high brittleness, the gel can be controlled to be in a predetermined shape and size without cutting the gel, whereby the gel can be prevented from being non-uniformly crumbled with no relation to the cutting direction of the gel.

In the method for producing a gel pulverized product-containing liquid, for example, the concentration of the gel in a liquid containing the gel (gel-containing liquid) is measured after the first pulverization stage and before the last pulverization stage to subject only the liquid having the concentration of the gel within the predetermined numerical range to a subsequent pulverization stage. The liquid to be subjected to measurement of the concentration of the gel is required to be a homogeneous liquid and thus is preferably a liquid that has a high velocity at a certain level and is difficult to be solid-liquid separated after the pulverization stage. As mentioned above, from the viewpoint of the ease of handling of the gel, the concentration of the gel is preferably not too high to prevent the viscosity of the gel from being too high, and from the viewpoint of using the gel-containing liquid as a coating solution, the concentration of the gel is preferably not too low to prevent the viscosity of the gel from being too low. For example, from such points of view, only the liquid having the concentration of the gel within the predetermined numerical range may be subjected to subsequent pulverization stages until the last pulverization stage is finished. The predetermined numerical range of the concentration of the gel is, for example, as mentioned above and may be, for example, 2.8 wt% or more and 3.4 wt% or less, although it is not limited thereto. The measurement of the concentration of the gel (concentration control) may be performed after the first pulverization stage before the last pulverization stage as mentioned above. However, in addition to this, the concentration control may be performed either one or both of: after the solvent replacement step and before the gel pulverization step; and after the last pulverization stage (e.g., the second pulverization stage). Then, after the measurement of the concentration of the gel, for example, only the liquid having the concentration of the gel within the predetermined numerical range is subjected to a subsequent pulverization stage or is used as a gel pulverized product-containing liquid which is a completed product. Moreover, when the concentration of the gel is measured after the solvent replacement step before the gel pulverization step, the concentration adjustment step may be performed thereafter if necessary.

In the concentration control after the solvent replacement step before the gel pulverization step, the amount of the solvent adhered to the gel is unstable, whereby the measured concentration by each measurement varies widely in some cases. Thus, prior to the concentration control after the solvent replacement step and before the gel pulverization step, the shape and the size of the gel is controlled to be almost uniform by the gel form control step. Accordingly, the concentration can be measured stably. Furthermore, for example, the concentration of the gel in the gel-containing liquid can be accurately controlled collectively.

In the method for producing a gel pulverized product-containing liquid, at least one of the pulverization stages is preferably performed by a different pulverization technique from that of at least one of the other pulverization stages. All of the pulverization techniques in the pulverization stages may be different from one another, or some of them may be the same. For example, when the number of the pulverization stages is three, all of the three pulverization stages may be performed by different techniques (i.e., using three pulverization techniques), or two of them may be performed by the same pulverization technique, and the other pulverization stage is performed by a different pulverization technique. The pulverization technique is not limited to particular techniques, and examples thereof include a cavitation technique

and a media-less technique.

In the method for producing a gel pulverized product-containing liquid, the gel pulverized product-containing liquid may be, for example, a sol containing particles (pulverized product particles) obtained by pulverizing the gel.

In the method for producing a gel pulverized product-containing liquid, the pulverization stages may include a coarse pulverization stage and a main pulverization stage, and massive sol particles may be obtained by the coarse pulverization stage, and sol particles maintaining a porous gel network may then be obtained by the main pulverization stage.

The method for producing a gel pulverized product-containing liquid may further include a classification step of classifying particles of the gel after at least one of the pulverization stages (e.g., at least one of the first pulverization stage or the second pulverization stage), for example.

The method for producing a gel pulverized product-containing liquid may further include, for example, a gelation step of gelling a massive porous material in a solvent to obtain a gelled product. In this case, the gelled product obtained by the gelation step may be used in the first pulverization stage (e.g., the first pulverization stage) among the pulverization stages, for example.

The method for producing a gel pulverized product-containing liquid may further include, for example, an aging step of aging the gelled product in a solvent. In this case, the gel after the aging step may be used in the first pulverization stage (e.g., the first pulverization stage) among the pulverization stages, for example.

In the method for producing a gel pulverized product-containing liquid, the solvent replacement step of replacing the solvent with another solvent may be performed after the gelation step, for example. In this case, the gel in the other solvent may be used in the first pulverization stage (e.g., the first pulverization stage) among the pulverization stages, for example.

For example, the pulverization of the porous material may be controlled while measuring the shear viscosity of the liquid in at least one of the pulverization stages (e.g., at least one of the first pulverization stage or the second pulverization stage) in the method for producing a gel pulverized product-containing liquid.

At least one of the pulverization stages (e.g., at least one of the first pulverization stage or the second pulverization stage) in the method for producing a gel pulverized product-containing liquid may be performed by, for example, high pressure media-less pulverization.

In the method for producing a gel pulverized product-containing liquid, the gel may be, for example, a gel of a silicon compound at least containing three or less functional groups having saturated bonds.

According to the gel pulverized product-containing liquid, the low refractive index layer can be formed by forming a coating film of the liquid and chemically bonding pulverized products in the coating film to each other, for example. For example, by a production method including the step of producing a gel pulverized product-containing liquid by the method for producing a gel pulverized product-containing liquid, the step of coating the gel pulverized product-containing liquid onto the base layer to form a coating film, and the step of drying the coating film, a layer having a high void fraction (high void fraction layer) can be produced. The high void fraction layer may have, for example, 60 vol% or more of a void fraction. With such high void fraction, the high void fraction layer functions as the low refractive index layer.

The gel pulverized product-containing liquid contains, for example, pulverized products of gel obtained in the pulverization step (the first pulverization stage and the second pulverization stage) and the other solvent.

The method for producing a gel pulverized product-containing liquid includes, for example, as mentioned above, multiple pulverization stages of a pulverization step of pulverizing the gel (e.g., porous gel material), which includes, for example, the first pulverization stage and the second pulverization stage. The following describes the case where the method for producing a gel pulverized product-containing liquid includes the first pulverization stage and the second pulverization stage with reference to an example. The following description is made mainly for the case where the gel is a porous gel material (porous gel material). The present invention, however, is by no means limited thereto, and the description of the case where the gel is a porous material (porous gel material) can be applied in an analogical manner to other cases. Hereinafter, the pulverization stages (e.g., the first pulverization stage and the second pulverization stage) in the method for producing a gel pulverized product-containing liquid are collectively also referred to as the "pulverization step".

The gel pulverized product-containing liquid can be used in production of a low refractive index layer that exhibits the same function as air layer (e.g., a refractive index), for example. Specifically, for example, the gel pulverized product-containing liquid contains pulverized products of the porous gel material, the three-dimensional structure of the non-pulverized porous gel material in the pulverized products is destroyed, whereby a new three-dimensional structure different from that of the non-pulverized porous gel material can be formed in the pulverized products. Thus, for example, a coating film (precursor of a low refractive index layer) formed using the gel pulverized product-containing liquid becomes a layer having a new pore structure (new void-containing structure) that cannot be obtained in a layer formed using the non-pulverized porous gel material. The layer having a new pore structure can exhibit the same function (have, for example, the same refractive index) as the air layer. Further, for example, when pulverized products have residual silanol groups, the gel pulverized product-containing liquid forms a new three-dimensional structure as the coating film (precursor

of the low refractive index layer), and the pulverized products can be thereafter bonded chemically to each other. Thus, even though the low refractive index layer to be formed has a structure with void spaces, it can maintain a sufficient strength and sufficient flexibility.

The range of the volume average particle diameter of the pulverized products (particles of porous gel material) in the gel pulverized product-containing liquid is, for example, from 10 to 1000 nm, from 100 to 500 nm, and from 200 to 300 nm. The volume average particle diameter indicates a variation in particle size of the pulverized products in the gel pulverized product-containing liquid according to the present invention. The volume average particle diameter can be measured with a particle size distribution analyzer based on dynamic light scattering, laser diffraction, or the like, or using an electron microscope such as a scanning electron microscope (SEM) or a transmission electron microscope (TEM), as mentioned above, for example.

The concentration of the gel pulverized products in the gel pulverized product-containing liquid is not limited to particular concentrations and is, for example, from 2.5 to 4.5 wt%, from 2.7 to 4.0 wt%, or from 2.8 to 3.2 wt% as particles with a particle diameter from 10 to 1000 nm.

The gel (e.g., porous gel material) in the gel pulverized product-containing liquid is not limited to particular gels and can be, for example, a silicon compound.

The silicon compound is not limited to particular compounds and can be, for example, a silicon compound at least containing three or less functional groups having saturated bonds. "Containing three or less functional groups having saturated bonds" means that the silicon compound contains three or less functional groups and these functional groups have saturated bonds with silicon (Si).

Examples of the monomer silicon compound include a compound represented by the following chemical formula (2).

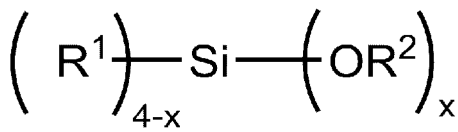 ・・・(2)

In the chemical formula (2), for example, X is 2, 3, or 4, $R^1$ and $R^2$ are each a linear or branched alkyl group, $R^1$ and $R^2$ may be the same or different from each other, R1 may be the same or different from each other when X is 2, and $R^2$ may be the same or different from each other.

X and $R^1$ are the same as those in the chemical formula (1) described below, for example. Regarding $R^2$, reference can be made to the description as to the examples of $R^1$ in the chemical formula (1), for example.

A specific example of the silicon compound represented by the chemical formula (2) is the one in which X is 3, which is a compound represented by the following chemical formula (2'). In the chemical formula (2'), $R^1$ and $R^2$ are the same as those in the chemical formula (2). When $R^1$ and $R^2$ are both methyl groups, the silicon compound is trimethoxy(methyl)silane (also referred to as "MTMS" hereinafter).

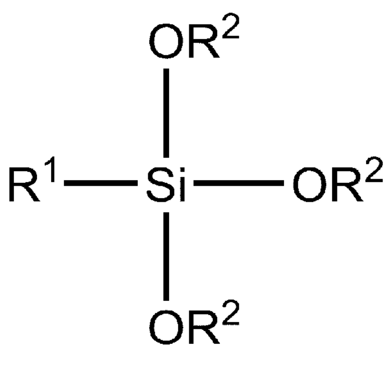 ・・・(2')

The concentration of the pulverized products of the porous gel material in the solvent of the gel pulverized product-containing liquid is not limited to particular concentrations and is, for example, from 0.3% to 50% (v/v), 0.5% to 30% (v/v), or 1.0% to 10% (v/v). The concentration of the pulverized products is preferably not too high to suppress or prevent the problem where the fluidity of the pulverized product-containing liquid is reduced considerably, resulting in aggregation and the formation of coating streaks during the coating, for example. On the other hand, the concentration of the pulverized products is preferably not too low to suppress or prevent the problems of time required for drying a solvent and a reduction in void fraction due to a large amount of residual solvent immediately after drying, for example.

The physical properties of the gel pulverized product-containing liquid are not limited to particular properties. The shear velocity of the gel pulverized product-containing liquid is, for example, in the range from 1 to 1 mPa·s, from 1 to 500 mPa·s, from 1 to 50 mPa·s, from 1 to 30 mPa·s, from 1 to 10 mPa·s, from 10 mPa·s to 1 Pa·s, from 10 to 500 mPa·s, from 10 to 50 mPa·s, from 10 to 30 mPa·s, from 30 mPa·s to 1 Pa·s, from 30 to 500 mPa·s, from 30 to 50 mPa·s, 50 mPa·s to 1 Pa·s, from 50 to 500 mPa·s, or 500 mPa·s to 1 Pa·s, at a shear rate of 1000 1/s. When the shear viscosity is too high, for example, coating streaks may be formed, which may cause defects such as a decrease in transfer ratio in gravure coating. On the other hand, when the shear viscosity is too low, for example, it may not be possible to provide a sufficient wet thickness of the gel pulverized product-containing liquid when coating the gel pulverized product-containing liquid, so that a desired thickness cannot be obtained after drying.

In the gel pulverized product-containing liquid, the solvent can be, for example, a dispersion medium. The dispersion medium (hereinafter, also referred to as "coating solvent") is not limited to particular media and can be, for example, a gelation solvent or a pulverization solvent and is preferably the pulverization solvent. The coating solvent contains an organic solvent having a boiling point of 70°C or more and less than 180°C and a saturation vapor pressure of 15 kPa or less at 20°C.

Examples of the organic solvent include carbon tetrachloride, 1,2-dichloroethane, 1,1,2,2-tetrachloroethane, trichloroethylene, isopropyl alcohol, isopropyl alcohol, isopentyl alcohol, 1-pentyl alcohol (pentanol), ethyl alcohol (ethanol), ethylene glycol monoethyl ether, ethylene glycol monoethyl ether acetate, ethylene glycol mono-n-butyl ether, ethylene glycol monomethyl ether, xylene, cresol, chlorobenzene, isobutyl acetate, isopropyl acetate, isopentyl acetate, ethyl acetate, n-butyl acetate, n-propyl acetate, n-pentyl acetate, cyclohexanol, cyclohexanone, 1,4-dioxane, N,N-dimethylformamide, styrene, tetrachloroethylene, 1,1,1-trichloroethane, toluene, 1-butanol, 2-butanol, methyl isobutyl ketone, methyl ethyl ketone, methyl cyclohexanol, methyl cyclohexanone, methyl n-butyl ketone, and isopentanol. The dispersion medium may contain an appropriate amount of a perfluoro-based surfactant or silicon-based surfactant that reduces the surface tension.

The gel pulverized product-containing liquid can be, for example, a sol particle liquid which is a sol obtained by dispersing the pulverized products in the dispersion medium. By coating the gel pulverized product-containing liquid according to the present invention onto the base, drying the sol particle liquid, and chemically crosslinking the particles in the sol particle liquid in the bonding step to be mentioned below, for example, a void-containing layer having film strength at or above a certain level can be formed continuously. The term "sol" as used in the present invention refers to a state where, by pulverizing a three-dimensional structure of a gel, pulverized products (i.e., particles of porous sol material each having a three-dimensional nanostructure holding part of the void-containing structure) are dispersed in a solvent and exhibit fluidity.

A catalyst for chemically bonding the pulverized products of the gel to each other can be added to the gel pulverized product-containing liquid, for example. The content of the catalyst is not limited to particular contents and is, for example, 0.01 to 20 wt%, 0.05 to 10 wt%, or 0.1 to 5 wt%, relative to the weight of the gel pulverized products.

The gel pulverized product-containing liquid may contain a crosslinking assisting agent for indirectly bonding the pulverized products of the gel, for example. The content of the crosslinking assisting agent is not limited to particular contents and is, for example, from 0.01 to 20 wt%, from 0.05 to 15 wt%, or from 0.1 to 10 wt% with respect to the weight of the pulverized product of the gel.

The proportion of functional groups that are not involved in a crosslinked structure inside the gel among functional groups of structural unit monomers of the gel in the pulverized product-containing liquid may be, for example, 30 mol% or less, 25 mol% or less, 20 mol% or less, 15 mol% or less or may be, for example, 1 mol% or more, 2 mol% or more, 3 mol% or more, or 4 mol% or more. The proportion of functional groups that are not involved in the crosslinked structure inside the gel can be measured as follows, for example.

(Method for measuring proportion of functional groups that are not involved in crosslinking structure inside gel)

The gel after drying is subjected to a solid state NMR (Si-NMR), and the proportion of residual silanol groups that are not involved in a crosslinked structure (functional groups that are not involved in the crosslinked structure inside the gel) is calculated from the peak ratio obtained by the NMR. Further, when the functional group is other than the silanol group, the proportion of functional groups that are not involved in a crosslinked structure inside the gel can be calculated from the peak ratio obtained by the NMR according to this method.

The following describes an example of a method for producing a gel pulverized product-containing liquid. The gel pulverized product-containing liquid can be described as described below unless otherwise stated.

A mixing step of mixing particles (pulverized product) of the porous gel material and the solvent is an optional step, and the method for producing a gel pulverized product-containing liquid may or may not contain the mixing step. A specific example of the mixing step includes, for example, a step of mixing a dispersion medium and pulverized products of a gelled silicon compound (silicon compound gel) obtained from a silicon compound at least containing three or less functional groups having saturated bonds. In the present invention, the pulverized products of the porous gel

material can be obtained from the porous gel material by the pulverization step to be described below, for example. The pulverized products of the porous gel material can be obtained from the porous gel material that is obtained after an aging treatment in an aging step to be described below, for example.

In the method for producing a gel pulverized product-containing liquid, the gelation step is, for example, a step of gelling a massive porous material in a solvent to produce a porous gel material. A specific example of the gelation step can be, for example, a step of gelling a silicon compound at least containing three or less functional groups having saturated bonds in a solvent to generate silicon compound gel.

The following describes the gelation step with reference to an example where the porous gel material is a silicon compound.

The gelation step is, for example, a step of gelling the monomer silicon compound by a dehydration condensation reaction in the presence of a dehydration condensation catalyst, and by the gelation step, a silicon compound gel is obtained. The silicon compound gel has, for example, a residual silanol group, and the residual silanol group is preferably adjusted, as appropriate, according to the chemical bonding among pulverized products of the silicon compound gel to be described below.

In the gelation step, the silicon compound is only required to be gelled by a dehydration condensation reaction and is not limited to particular compounds. For example, the silicon compounds are bonded by the dehydration condensation. Bonding between the silicon compounds is, for example, hydrogen bonding or intermolecular force bonding.

The silicon compound can be, for example, a silicon compound represented by the chemical formula (1). The silicon compound represented by the chemical formula (1) has hydroxyl groups. Thus, silicon compounds of the chemical formula (1) can be bonded to each other by hydrogen bonding or intermolecular bonding via their hydroxyl groups, for example.

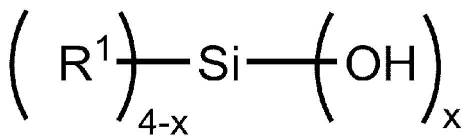 · · · (1)

In the chemical formula (1), X is 2, 3, or 4, and $R^1$ is a linear or a branched alkyl group, for example. The number of carbon atoms in $R^1$ is from 1 to 6, from 1 to 4, or from 1 to 2, for example. The linear alkyl group is a methyl group, an ethyl group, a propyl group, a butyl group, a pentyl group, or a hexyl group, for example. The branched alkyl group is an isopropyl group or an isobutyl group, for example. The X is 3 or 4, for example.

A specific example of the silicon compound represented by the chemical formula (1) is the one in which X is 3, which is a compound represented by the following chemical formula (1'). In the chemical formula (1'), $R^1$ is the same as that in the chemical formula (1), and is, for example, a methyl group. When $R^1$ is a methyl group, the silicon compound is tris(hydroxy)methylsilane. When X is 3, the silicon compound is a trifunctional silane having three functional groups, for example.

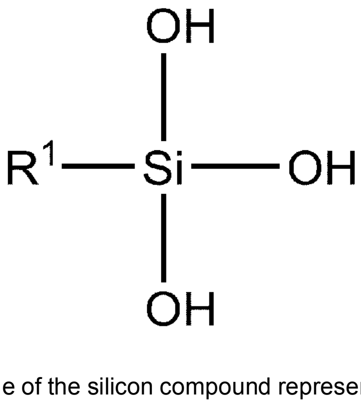 · · · (1')

Another specific example of the silicon compound represented by the chemical formula (1) is the one in which X is 4. In this case, the silicon compound is a tetrafunctional silane having four functional groups, for example.

The silicon compound may be a precursor that forms a silicon compound of the chemical formula (1) by hydrolysis, for example. The precursor is only required to be capable of generating the silicon compound, for example by hydrolysis. A specific example of the precursor is a compound represented by the following chemical formula (2).

When the silicon compound is a precursor represented by the chemical formula (2), the method for producing an optical laminate according to the present invention may further include the step of hydrolyzing the precursor prior to the gelation step, for example.

The method for the hydrolysis of the precursor is not limited to particular methods, and the precursor can be hydrolyzed through a chemical reaction in the presence of a catalyst, for example. Examples of the catalyst include acids such as an oxalic acid and an acetic acid. The hydrolysis reaction can be caused by, for example, adding an aqueous oxalic acid solution dropwise slowly to a solution of the precursor of the silicon compound in dimethylsulfoxide at room temperature and then stirring the resultant mixture for about 30 minutes. In hydrolysis of the precursor of the silicon compound, for example, by hydrolyzing the alkoxy group of the precursor of the silicon compound completely, it is possible to more efficiently achieve gelation and aging to be performed subsequently and heating and immobilization to be performed after the formation of a void-containing structure.

In the present invention, the silicon compound can be, for example, a hydrolysate of trimethoxy(methyl)silane.

The monomer silicon compound is not limited to particular compounds and can be selected, as appropriate, according to the intended use of the low refractive index layer to be produced, for example. In production of the low refractive index layer, the silicon compound preferably is the trifunctional silane in terms of its excellent properties to allow realization of a low refractive index when a premium is placed on the low refractive index, for example. The silicon compound preferably is the tetrafunctional silane from the viewpoint of imparting high abrasion resistance when a premium is placed on strength (e.g., abrasion resistance), for example. As the silicon compound as a raw material of the silicon compound gel, only one type of silicon compounds may be used, or two or more types of silicon compounds may be used in combination, for example. Specifically, the silicon compound may be made up of the trifunctional silane only, the tetrafunctional silane only, or both the trifunctional silane and the tetrafunctional silane, for example. Also, the silicon compounds further may include a silicon compound(s) other than the trifunctional silane and the tetrafunctional silane, for example. When two or more types of silicon compounds are used as the silicon compounds, the ratio thereof is not limited to particular ratios and can be set as appropriate.

The gelation of porous material such as the silicon compound can be achieved by a dehydration condensation reaction of the porous materials, for example. The dehydration condensation reaction preferably is performed in the presence of a catalyst, for example. Examples of the catalyst include dehydration condensation catalysts such as: acid catalysts including a hydrochloric acid, an oxalic acid, and a sulfuric acid; and base catalysts including ammonia, potassium hydroxide, sodium hydroxide, and ammonium hydroxide. The dehydration condensation catalyst particularly preferably is a base catalyst. In the dehydration condensation reaction, the amount of the catalyst to be added relative to the porous material is not limited to particular materials, and is, for example, 0.01 to 10 mol, 0.05 to 7 mol, or 0.1 to 5 mol per a mole of the porous material.

The gelation of the porous material such as the silicon compound preferably is performed in a solvent, for example. The proportion of the porous material in the solvent is not limited to particular proportions. Examples of the solvent include dimethylsulfoxide (DMSO), N-methylpyrrolidone (NMP), N,N-dimethylacetamide (DMAc), dimethylformamide (DMF), γ-butyrolactone (GBL), acetonitrile (MeCN), and ethylene glycol ethyl ether (EGEE). One type of solvent may be used, or two or more types of solvents may be used in combination, for example. Hereinafter, the solvent used for the gelation also is referred to as a "gelation solvent".

The conditions for the gelation are not limited to particular conditions. The treatment temperature for treating the solvent containing the porous material is, for example, from 20°C to 30°C, from 22°C to 28°C, or from 24°C to 26°C, and the treatment time for treating the same is, for example, from 1 to 60 minutes, from 5 to 40 minutes, or from 10 to 30 minutes. When the dehydration condensation reaction is performed, the treatment conditions are not limited to particular condition, and the treatment conditions given above as examples also apply to the dehydration condensation reaction. When the porous material is a silicon compound, siloxane bonds are grown and silica primary particles are formed by the gelation, for example. As the reaction further proceeds, the primary particles are connected in the form of a string of beads, whereby a gel having a three-dimensional structure is generated.

The form of the gel obtained from the porous material in the gelation step is not limited to particular forms. The term "gel" generally refers to a solidified state of a solute where particles of the solute have lost their independent mobility owing to interaction and form an aggregate. Among various types of gels, a "wet gel" generally refers to a gel containing a dispersion medium in which particles of a solute build a uniform structure, and a "xerogel" generally refers to a gel from which a solvent is removed and in which particles of a solute form a network structure with void spaces. In the present invention, for example, wet gel is preferably used as the silicon compound gel. When the porous gel material is a silicon compound gel, the amount of a residual silanol group in the silicon compound gel is not limited to particular amounts and can be, for example, in the same range to be mentioned below.

The porous gel material per se obtained by the gelation may be subjected to the solvent replacement step and the first pulverization stage or may be subjected to an aging treatment in the aging step prior to the first pulverization stage, for example. In the aging step, the gelled porous material (porous gel material) is aged in a solvent. The conditions for the aging treatment in the aging step are not limited to particular conditions, and for example, the porous gel material may be incubated in a solvent at a predetermined temperature. For example, by further growing the primary particles of the porous gel material having a three-dimensional structure obtained by the gelation through the aging treatment, it is possible to increase the size of the particles themselves. As a result, the contact area at the neck portion where the

particles are in contact with each other increases so that the contact state can be changed from point contact to surface contact. The above-described aging treatment of the porous gel material improves the strength of the gel itself, for example, whereby the strength of the three-dimensional basic structures of the pulverized products after pulverization can be improved. As a result, it is possible to reduce the possibility that, in the drying step to be performed after coating a base with the gel pulverized product-containing liquid according to the present invention to form a coating film, pores in the void-containing structure formed by deposition of the three-dimensional basic structures may become smaller as the solvent in the coating film volatilizes during the drying step, for example.

As to the temperature for the aging treatment, the lower limit thereof is, for example, 30°C or higher, 35°C or higher, or 40°C or higher. The upper limit thereof is, for example, 80°C or lower, 75°C or lower, or 70°C or lower. The range thereof is, for example, from 30°C to 80°C, from 35°C to 75°C, or from 40°C to 70°C. The predetermined time is not limited to particular times. The lower limit thereof is, for example, 5 hours or more, 10 hours or more, or 15 hours or more. The upper limit thereof is, for example, 50 hours or less, 40 hours or less, or 30 hours or less. The range thereof is, for example, from 5 to 50 hours, from 10 to 40 hours, or from 15 to 30 hours. Optimal aging conditions are, for example, as mentioned above, conditions set to increase the size of the primary particles and to increase the contact area at the neck portion in the porous gel material. Furthermore, it is preferable to take the boiling point of the solvent used into consideration for the temperature in the aging treatment in the aging step, for example. For example, when the aging temperature is too high in the aging treatment, the solvent may volatilize excessively to cause defectiveness such that the pores in the three-dimensional void-containing structure are closed owing to the condensation of the concentration of the coating solution. On the other hand, for example, when the aging temperature is too low in the aging treatment, the effect of the aging cannot be obtained sufficiently. Besides, variation in temperature over time in a mass production process increases, which may result in products with poor quality.

In the aging treatment, the same solvent as in the gelation step can be used, for example. Specifically, it is preferable that a reactant obtained after the gelation treatment (i.e., the solvent containing the porous gel material) is subjected to the aging treatment as it is. When the porous gel material is the silicon compound gel, the amount of residual silanol groups contained in the silicon compound gel having been subjected to the gelation and the subsequent aging treatment by mole indicates, for example, the proportion of the residual silanol groups, assuming that the amount of the alkoxy groups in the raw material used in the gelation (e.g., the silicon compound or the precursor thereof) by mole is 100. The upper limit thereof is, for example, 50% or less, 40% or less, or 30% or less. The lower limit thereof is, for example, 1% or more, 3% or more, or 5% or more. The range thereof is, for example, from 1% to 50%, from 3% to 40%, or from 5% to 30%. For the purpose of increasing the hardness of the silicon compound gel, it is preferable that the amount of the residual silanol groups by mole is smaller, for example. When the amount of the silanol groups by mole is too large, there is a possibility that the void-containing structure cannot be maintained until the crosslinking of the precursor of the low refractive index layer is completed in formation of the low refractive index layer, for example. On the other hand, when the number of moles of the silanol groups is too small, there is a possibility that, in bonding step, the precursor of the low refractive index layer cannot be crosslinked, so that a sufficient film strength cannot be imparted, for example. The above description is directed to an example where residual silanol groups are used. When the silicon compounds that have been modified with various reactive functional groups are used as raw materials of the silicon compound gel, for example, the same phenomenon can be applied to each of the reactive functional groups.

The porous gel material per se obtained by the gelation is subjected to, for example, an aging treatment in the aging step, then a solvent replacement step, and thereafter the pulverization step. In the solvent replacement step, the solvent is replaced with another solvent.

As mentioned above, the method for producing a gel pulverized product-containing liquid includes, for example, a pulverization step of pulverizing the porous gel material. The porous gel material after the gelation step may be subjected to the pulverization, and the aged porous gel material after the aging treatment may further be subjected to the pulverization, for example.

Furthermore, as mentioned above, the gel form control step of controlling the shape and the size of the gel may be performed prior to the solvent replacement step (e.g., after the aging step). The shape and the size of the gel to be controlled in the gel form control step is not limited to particular shapes and sizes and are, for example, as mentioned above. The gel form control step may be performed by dividing the gel into solids (3D solid) in an appropriate size and shape, for example.

Moreover, as mentioned above, the gel pulverization step may be performed after subjecting the gel to the solvent replacement step. In the solvent replacement step, the solvent is replaced with another solvent. When the solvent is not replaced with another solvent, the following problem may occur. For example, the catalyst and solvent used in the gelation step remain after the aging step to cause gelation of the liquid over time and affect the pot life of the gel pulverized product-containing liquid to be obtained finally, and the drying efficiency at the time when the coating film formed using the gel pulverized product-containing liquid is dried is reduced. Hereinafter, the other solvent in the gel pulverization step is also referred to as a "pulverization solvent".

The pulverization solvent (another solvent) is not limited to particular solvents, and may be, for example, an

organic solvent. The organic solvent may be, for example, the one having a boiling point of 140°C or less, 130°C or lower, 100°C or lower, or 85°C or lower. Specific examples thereof include isopropyl alcohol (IPA), ethanol, methanol, butanol, n-butanol, 2-butanol, isobutyl alcohol, pentyl alcohol, propylene glycol monomethyl ether (PGME), methyl cellosolve, and acetone. One type of pulverization solvent may be used, or two or more types of pulverization solvents may be used in combination, for example.

When the pulverization solvent has a low polarity, for example, the solvent replacement step is performed by multiple solvent replacement stages, and in the solvent replacement stages, the hydrophilicity of the other solvent may be caused to be lower in a subsequent stage than that in a prior stage. As a result, for example, solvent replacement efficiency can be improved, and the residual amount of a solvent for gel production in the gel (e.g., DMSO) can be extremely small. Specifically, for example, the solvent replacement step is performed by three solvent replacement stages, and DMSO in a gel may be first replaced with water in the first solvent replacement stage, the water in the gel may then be replaced with IPA in the second solvent replacement stage, and the IPA in the gel may thereafter be replaced with isobutyl alcohol in the third solvent replacement stage.

The combination of the gelation solvent and the pulverization solvent is not limited to particular combinations, and examples thereof include the combinations of: DMSO and IPA; DMSO and ethanol; DMSO and isobutyl alcohol; and DMSO and n-butanol. By replacing the gelation solvent by the pulverization solvent as described above, it is possible to form a more uniform coating film in the formation of the coating film to be described below, for example.

The solvent replacement step is not limited to particular steps and can be performed as follows, for example. That is, first, the gel (e.g., gel after the aging treatment) produced in the gel production step is immersed in or brought into contact with the other solvent to dissolve a catalyst for gel production in the gel and an alcohol component and water generated by the condensation reaction in the other solvent. The solvent in which the gel is immersed or with which the gel is brought into contact is drained, and the gel is again immersed or brought into contact with a new solvent. This is repeatedly performed until the residual amount of the solvent for gel production in the gel becomes a desired amount. The immersion time is, for example, 0.5 hours or more, 1 hour or more, or 1.5 hours or more. The upper limit thereof is not limited to particular times and is, for example, 10 hours or less. The immersion in the solvent may be performed by continuous contact of the solvent with the gel. The temperature during the immersion is not limited to particular temperatures and is, for example, from 20°C to 70°C, from 25°C to 65°C, or from 30°C to 60°C. By heating, the solvent is replaced promptly, and the amount of the solvent required for replacement becomes small. However, the solvent may be simply replaced at room temperature. Further, for example, when the solvent replacement step is performed by multiple solvent replacement stages, each of the solvent replacement stages may be performed in the manner mentioned above.

Moreover, after the solvent replacement step, the pulverization step of pulverizing the gel in the pulverization solvent is performed. Furthermore, for example, as mentioned above, the concentration of the gel may be performed if necessary after the solvent replacement step prior to the pulverization step, and the concentration adjustment step may be performed thereafter if necessary. The concentration of the gel after the solvent replacement step prior to the gel pulverization step can be measured as follows, for example. That is, first, a gel is taken out from the other solvent (pulverization solvent) after the solvent replacement step. This gel is controlled to be masses in appropriate shapes and sizes (e.g., blocks) by the gel form control step, for example. A solvent adhered to the periphery of each mass of the gel is then removed, and the concentration of the solid content in one mass of the gel is measured by weight dry method. At that time, the concentration of the solid content in each of a plurality of randomly sampled masses (e.g., 6 masses) is measured, and variations of the measured concentrations from the average thereof are calculated, to determine reproducibility of the measured concentrations. In the concentration adjustment step, for example, the concentration of the gel in the gel-containing liquid may be decreased by adding the other solvent (pulverization solvent). Alternatively, in the concentration adjustment step, for example, the concentration of the gel in the gel-containing liquid may be increased by evaporating the other solvent (pulverization solvent).

In the method for producing a gel pulverized product-containing liquid, for example, as mentioned above, multiple pulverization stages may be performed as the pulverization step, and specifically, for example, the first pulverization stage and the second pulverization stage may be performed as the pulverization step. In addition to the first pulverization stage and the second pulverization stage, a further pulverization stage may be performed as the pulverization step. That is, in the method for producing a gel pulverized product-containing liquid according to the present invention, the number of pulverization stages included in the pulverization step is not limited to two and may be three or more.

The following describes the first pulverization stage and the second pulverization stage.

The first pulverization stage is a step of pulverizing the porous gel material. The second pulverization stage is a step of further pulverizing particles of the porous gel material, performed after the first pulverization stage.

The volume average particle diameters of particles of the porous gel material obtained by the first pulverization stage and the second pulverization stage are, for example, as mentioned above. The method for measuring the volume average particle diameter is as mentioned above, for example.

The shear velocity of the gel pulverized product-containing liquid immediately after each of the first pulverization

stage and the second pulverization stage is, for example, as mentioned above. The method for measuring the shear viscosity is also as mentioned above, for example.

For example, as mentioned above, the concentration control of the gel-containing liquid may be performed by measuring the concentration of the gel in the gel-containing liquid immediately after the first pulverization stage, and only the liquid having a concentration of the gel in a predetermined numerical range is subjected to the second pulverization stage.

The method for pulverizing the porous gel material is not limited to particular methods. For example, the porous gel material can be pulverized using a high pressure media-less pulverizer, an ultrasonic homogenizer, a high-speed rotary homogenizer, a high pressure extrusion pulverizer, or a wet media-less pulverizer utilizing any other cavitation phenomenon. The first pulverization stage and the second pulverization stage may be performed by the same pulverization method or different pulverization methods and are preferably performed by different pulverization methods.

At least one of the first pulverization stage or the second pulverization stage is preferably performed by a method for pulverizing the porous gel material by controlling energy as either of the pulverization methods. The method for pulverizing the porous gel material by controlling energy can be, for example, a method where the pulverization is performed using a high pressure media-less pulverizer.

In the method for pulverizing the porous gel material using ultrasound, the pulverization strength is high, but it is difficult to control (adjust) the pulverization. In contrast, in the method for pulverizing the porous gel material by controlling energy, the pulverization can be performed while controlling (adjusting) it. Accordingly, an uniform gel pulverized product-containing liquid can be produced with the limited amount of work. Thus, the mass production of the gel pulverized product-containing liquid becomes possible, for example.

An apparatus that performs media pulverization, such as a ball mill, physically destroys the void-containing structure of a gel during pulverization, for example. In contrast, a cavitation-type pulverizer, such as a homogenizer is based on a media-less pulverizing method, and separates the bonded surfaces of porous particles bonded relatively weakly and already contained in a gel three-dimensional structure and bonded relatively weakly with a high speed shear force, for example. Thus, a new three-dimensional sol structure is obtained by pulverizing the porous gel material and can maintain, in formation of a coating film, a void-containing structure having a particle size distribution within a certain range and can form a void-containing structure again by deposition during coating and drying, for example. The conditions for the pulverization are not limited to particular conditions, and preferably are conditions that allow a gel to be pulverized without volatilizing a solvent by imparting a high speed flow instantaneously, for example. For example, it is preferable to pulverize the gel in such a manner that pulverized products having the above described variations in particle size (e.g., volume average particle diameter or particle size distribution) can be obtained. If the amount of work such as the pulverization time or the pulverization strength is not sufficient, coarse particles may remain, so that there is a possibility not only that fine pores cannot be formed but also that a high quality cannot be achieved owing to increased defects in appearance, for example. On the other hand, if the amount of work is too much, sol particles to be obtained may be too small to achieve a desired particle size distribution. This may reduce the size of void spaces formed by deposition of the particles after coating and drying, so that a desired void fraction may not be achieved, for example.

It is preferable to control pulverization of the porous material while measuring the shear velocity of the liquid in at least one of the first pulverization stage or the second pulverization stage. Specific methods thereof include a method where sol having both of a desired shear velocity and extremely superior uniformity is prepared in the middle of the pulverization stages and a method where inline monitoring of the shear velocity of the liquid is performed, and the monitored results are fed back to the pulverization stages. Accordingly, a gel pulverized product-containing liquid having both of a desired shear velocity and really superior uniformity can be prepared. Thus, for example, properties of the gel pulverized product-containing liquid can be controlled according to the intended use.

When the porous gel material is the silicon compound gel, the proportion of the residual silanol groups contained in the pulverized products after the pulverization stages is not limited to particular proportions and may be the same as in a range shown for the silicon compound gel after the aging treatment as an example.

The method for producing a gel pulverized product-containing liquid according to the present invention may further include a classification step after at least one of the pulverization stages (the first pulverization stage and the second pulverization stage). In the classification step, particles of the porous gel material are classified. The "classification" refers to, for example, classification of particles of the porous gel material according to the particle diameter. The method for the classification is not limited to particular methods, and the classification can be performed using a sieve. As mentioned above, the uniformity is really superior by the pulverization treatment including multiple stages in the above-described manner. Thus, when the gel pulverized product-containing liquid is applied to optical elements and the like, the appearance can be favorable, and when the classification treatment is further performed, the appearance can be further favorable.

The proportion of the pulverized products in the solvent containing the pulverized products after the pulverization step and the optional classification step is not limited to particular proportions and can be, for example, in the above-mentioned conditions for the gel pulverized product-containing liquid according to the present invention. The proportion

can be, for example, in the conditions of the solvent itself containing the pulverized products after the pulverization step or in the conditions adjusted after the pulverization step and before the use of the solvent as the gel pulverized product-containing liquid.

A liquid (e.g., suspension) containing the microporous particles (pulverized products of a gelled compound) can be prepared in the above-described manner. By further adding a catalyst for chemically bonding the microporous particles after or during the preparation of the liquid containing the microporous particles, it is possible to prepare a liquid containing the microporous particles and the catalyst. The amount of the catalyst to be added is not limited to particular amounts and is, for example, from 0.01 to 20 wt%, from 0.05 to 10 wt%, or from 0.1 to 5 wt% relative to the weight of the pulverized products of the gelled silicon compound. The catalyst may be a catalyst that promotes crosslinking of the microporous particles, for example. The chemical reaction of chemically bonding microporous particles preferably is a reaction utilizing a dehydration condensation reaction of residual silanol groups contained in silica sol molecules. By promoting the reaction between the hydroxyl groups in the silanol groups by the catalyst, the void-containing structure can be cured in a short time, so that continuous film formation becomes possible. The catalyst may be a photoactive catalyst or a thermoactive catalyst, for example. With the use of the photoactive catalyst, the microporous particles can be bonded (e.g., crosslinked) to each other without heating in production of a void-containing layer, for example. Accordingly, the shrinkage of the entire void-containing layer is less liable to occur, so that it is possible to maintain a higher void fraction, for example. In addition to or instead of the catalyst, a substance that generates a catalyst (catalyst generator) may be used. For example, in addition to or instead of the photoactive catalyst, a substance that generates a catalyst when subjected to light irradiation (photocatalyst generator) may be used, and in addition to or instead of the thermoactive catalyst, a substance that generates a catalyst when heated (thermal catalyst generator) may be used. The photocatalyst generator is not particularly limited, and may be, for example, a photobase generator (a substance that generates a basic catalyst when subjected to light irradiation) or a photo acid generator (a substance that generates an acidic catalyst when subjected to light irradiation). Among them, the photobase generator is preferable. Examples of the photobase generator include 9-anthrylmethyl N,N-diethylcarbamate (trade name: WPBG-018), (E)-1-[3-(2-hydroxyphenyl)-2-propenoyl]piperidine (trade name: WPBG-027), 1-(anthraquinon-2-yl)ethyl imidazolecarboxylate (trade name: WPBG-140), 2-nitrophenylmethyl 4-methacryloyloxypiperidine-1-carboxylate (trade name: WPBG-165), 1,2-diisopropyl-3-[bis(dimethylamino) methylene]guanidium 2-(3-benzoylphenyl)propionate (trade name: WPBG-266), 1,2-dicyclohexyl-4,4,5,5-tetramethylbiguanidium n-butyltriphenylborate (trade name: WPBG-300), 2-(9-oxoxanthen-2-yl)propionic acid 1,5,7-triazabicyclo[4.4.0]dec-5-ene (Tokyo Kasei Kogyo Co., Ltd.), and a compound containing 4-piperidinemethanol (trade name: HDPD-PB100, manufactured by Heraeus). Note here that the above products with the trade names including "WPBG" are all manufactured by Wako Pure Chemical Industries, Ltd. Examples of the photoacid generator include aromatic sulfonium: SP-170, manufactured by ADEKA), triarylsulfonium salt (trade name: CPI101A, manufactured by San-Apro Ltd.), and aromatic iodonium salt (trade name: Irgacure 250, manufactured by Ciba Japan). The catalyst for chemically bonding the microporous particles to each other is not limited to the photoactive catalyst or photocatalyst generator, and may be, for example, a thermoactive catalyst or a thermal catalyst generator. Examples of the catalyst for chemically bonding the microporous particles to each other include: base catalysts such as potassium hydroxide, sodium hydroxide, and ammonium hydroxide; and acid catalysts such as a hydrochloric acid, an acetic acid, and an oxalic acid. Among them, the base catalysts are preferable. The catalyst or catalyst generator for chemically bonding the microporous particles to each other can be used by adding it to a sol particle liquid (e.g., suspension) containing the pulverized products (microporous particles) immediately before coating the sol particle liquid, or can be used in the form of a mixture with a solvent, for example. The mixture may be, for example, a coating solution obtained by adding it directly to and dissolving it in the sol particle liquid, a solution obtained by dissolving it in a solvent, or a dispersion obtained by dispersing it in a solvent. The solvent is not limited to particular solvents, and examples thereof include water and buffer solutions.

(Method for producing low refractive index layer)

The following shows examples of the method for producing, using the gel pulverized product-containing liquid, a porous silicone material that is an example of the low refractive index layer according to the present invention. The present invention, however, is by no means limited thereby.

A method for producing a porous silicone material includes: for example, a precursor forming step of forming a precursor of the porous silicone material using a gel pulverized product-containing liquid; and a bonding step of chemically bonding pulverized products to each other in the gel pulverized product-containing liquid. The precursor also can be referred to as a coating film, for example.

By the method for producing the porous silicone material, a porous structure that exhibits the same function as an air layer is formed, for example. The reason for this is speculated as follows, for example. However, the present invention is not limited by this speculation.

The gel pulverized product-containing liquid used in the method for producing the porous silicone material

contains pulverized products of the silicon compound gel. Thus, the three-dimensional structure of the gelled silica compound is dispersed in three-dimensional basic structures of the pulverized products. Thus, when the precursor (e.g., the coating film) is formed using the gel pulverized product-containing liquid, the three-dimensional basic structures are deposited, and the void-containing structure based on the three-dimensional basic structures are formed in the method for producing the porous silicone material, for example. That is, according to the method for producing a porous silicone material, a new porous structure that is different from that of the silicon compound gel is provided by the pulverized products having the three-dimensional basic structures. Moreover, in the method for producing a porous silicone material, the pulverized products are chemically bonded to each other, whereby the new three-dimensional structure is immobilized. Thus, even though the porous silicone material to be obtained by the method for producing the porous silicone material has a structure with void spaces, it can maintain a sufficient strength and sufficient flexibility. A laminate film having various functions imparted therein can be produced using the porous silicone material as a low refractive index layer according to the present invention.

The above description regarding the gel pulverized product-containing liquid according to the present invention also applies to the method for producing a porous silicone material, unless otherwise stated.

In the precursor forming step of forming a precursor of the porous material, the gel pulverized product-containing liquid according to the present invention is coated on the base, for example. By coating the gel pulverized product-containing liquid according to the present invention onto, for example, a base, drying the coating film, and thereafter chemically bonding (e.g., crosslinking) pulverized products in the bonding step, for example, a void-containing layer having a film strength at or above a certain level can be formed continuously.

The amount of the gel pulverized product-containing liquid to be coated onto the base is not limited to particular amounts, and can be set as appropriate depending on, for example, a desired thickness of the porous silicone material. As a specific example, when the porous silicone material having a thickness from 0.1 to 1000 $\mu$m is to be formed, the amount of the gel pulverized product-containing liquid to be coated onto the base is, for example, in the range from 0.01 to 60000 $\mu$g, from 0.1 to 5000 $\mu$g, or from 1 to 50 $\mu$g per square meter of the base. It is difficult to uniquely define a preferable amount of the gel pulverized product-containing liquid to be coated, because it may be affected by the concentration of the liquid, the coating method, etc., for example. However, in terms of productivity, it is preferable to make a coating layer as thin as possible. When the coating amount is too large, for example, it is likely that the solvent may be dried in a drying oven before it volatilizes. If the solvent is dried before the void-containing structure is formed by the sedimentation and deposition of nano-sized pulverized sol particles in the solvent, formation of void spaces may be inhibited to lower the void fraction considerably. On the other hand, when the coating amount is too small, the risk of cissing due to unevenness, variation in hydrophilicity and hydrophobicity, etc. on the surface of the base may increase.

A precursor (coating film) of the porous material after coating the gel pulverized product-containing liquid onto the base may be subjected to a drying treatment. The purpose of the drying treatment is not only to remove the solvent in precursor of the porous material (the solvent contained in the gel pulverized product-containing liquid) but also to allow the sedimentation and deposition of the sol particles to occur to form a void-containing structure during the drying treatment, for example. The temperature in the drying treatment is, for example, from 50°C to 250°C, from 60°C to 150°C, or from 70°C to 130°C, and the time of the drying treatment is, for example, from 0.1 to 30 minutes, from 0.2 to 10 minutes, from 0.3 to 3 minutes. In terms of continuous productivity and realization of high void fraction, it is preferable to set the temperature and the time of the drying treatment lower and shorter, respectively, for example. If the conditions are too stringent, the following problem may arise, for example. That is, when the base is a resin film, for example, the base may extend in a drying oven as the temperature approaches the glass-transition temperature of the base, so that a void-containing structure formed immediately after the coating may have defects such as cracks. On the other hand, when the conditions are too mild, the following problem may arise, for example. That is, the film may contain a residual solvent when it comes out of the drying oven, so that, if the film rubs against a roller in a subsequent step, defects in appearance such as scratches may be caused.

The drying treatment may be natural drying, heat drying, or drying under reduced pressure, for example. The drying method is not limited to particular methods, and a commonly used heating unit can be used, for example. Examples of the heating unit include a hot air fan, a heating roller, and a far-infrared heater. In particular, from the viewpoint of performing continuous production industrially, heat drying is preferable. It is preferable to use a solvent having a low surface tension for the purpose of inhibiting the shrinkage stress that may occur as the solvent volatizes during the drying process and inhibiting a crack phenomenon in the void-containing layer (the porous silicone material) caused by the shrinkage stress. Examples of the solvent include, but are not limited to, lower alcohols typically, isopropyl alcohol (IPA), hexane, and perfluorohexane.

The base is not limited to particular bases, and for example, a base made of a thermoplastic resin, a base made of glass, an inorganic base plate typified by silicon, a plastic formed of a thermosetting resin, an element such as a semiconductor, or a carbon fiber-based material typified by carbon nanotube can be favorably used. The base, however, is by no means limited thereto. Examples of the form of the base include a film and a plate. Examples of the thermoplastic resin includes polyethylene terephthalate (PET), acrylic resins, cellulose acetate propionate (CAP), cycloolefin polymer

(COP), triacetate (TAC), polyethylene naphthalate (PEN), polyethylene (PE), and polypropylene (PP).

In the method for producing a porous silicone material, the bonding step is a step of chemically bonding pulverized products contained in a precursor (coating film) of the porous material. By the bonding step, the three-dimensional structures of the pulverized products in the precursor of the porous material are immobilized, for example. In the case of conventional immobilization by sintering, for example, a treatment at a high temperature of at least 200°C is performed to induce the dehydration condensation of silanol groups and the formation of siloxane bonds. In the bonding step according to the present invention, various additives that catalyze the above-described dehydration condensation reaction are caused to react with each other. With this configuration, for example, when the base is a resin film, it is possible to continuously form and immobilize the void-containing structure at a relatively low drying temperature of around 100°C and with a short treatment time of less than several minutes without damaging the base.

The method for achieving the above-described chemical bonding is not limited to particular methods and can be determined as appropriate depending on the type of the gelled silicon compound, for example. As a specific example, the chemical bonding can be achieved by chemically crosslinking the pulverized products. Besides this, for example, when inorganic particles such as titanium oxide particles are added to the pulverized products, the inorganic particles and the pulverized products may be chemically bonded by crosslinking. Furthermore, in the case of causing the pulverized products to carry a biocatalyst such as an enzyme, a site of the catalyst other than the catalytic site may be chemically crosslinked with the pulverized products. Therefore, the present invention is not only applicable to a void-containing layer (porous silicone material) formed by sol particles bonded to each other, but the applicable range of the present invention can be expanded to an organic-inorganic hybrid void-containing layer and a host-guest void-containing layer, for example. It is to be noted, however, that the applicable range of the present invention is not limited thereto.

For example, the bonding step can be performed through a chemical reaction in the presence of a catalyst depending on the type of pulverized products of the silicon compound gel. The chemical reaction in the present invention preferably is a reaction utilizing a dehydration condensation reaction of residual silanol groups contained in the pulverized products of the silicon compound gel. By promoting the reaction between the hydroxyl groups in the silanol groups by the catalyst, the void-containing structure can be cured in a short time, so that continuous film formation becomes possible. Examples of the catalyst include, but are not limited to, base catalysts such as potassium hydroxide, sodium hydroxide, and ammonium hydroxide and acid catalysts such as a hydrochloric acid, an acetic acid, and an oxalic acid. As a catalyst to be used in the dehydration condensation reaction, a base catalyst is particularly preferable. Also, catalysts that exhibit catalytic activity when irradiated with light (e.g., ultraviolet rays), such as photoacid generation catalysts and photobase generation catalysts can be used preferably. The photoacid generation catalysts and photobase generation catalysts are not limited to particular catalysts and are as mentioned above, for example. As mentioned above, it is preferable to add the catalyst to a sol particle liquid (e.g., suspension) containing the pulverized products immediately before coating the sol particle liquid, or to use the catalyst in the form of a mixture with a solvent, for example. The mixture may be, for example, a coating solution obtained by adding the catalyst directly to and dissolving the catalyst in the sol particle liquid, a solution obtained by dissolving the catalyst in a solvent, or a dispersion obtained by dispersing the catalyst in a solvent. The solvent is not limited to particular solvents, and examples thereof include water and buffer solutions, as mentioned above.

The gel-containing liquid may contain a crosslinking assisting agent for indirectly bonding the pulverized products of the gel, for example. This crosslinking assisting agent enters the spaces between the respective particles (the pulverized products), where it interacts with or bonds to the particles. This allows the particles somewhat apart from each other to be bonded to each other. As a result, it becomes possible to efficiently improve the strength. The crosslinking assisting agent preferably is a multi-crosslinking silane monomer. Specifically, the multi-crosslinking silane monomer may have at least two and at most three alkoxysilyl groups, the chain length between the alkoxysilyl groups may be at least one and at most ten carbon atoms, and the multi-crosslinking silane monomer may contain an element other than carbon, for example. Examples of the crosslinking assisting agent include bis(trimethoxysilyl)ethane, bis(triethoxysilyl)ethane, bis(trimethoxysilyl)methane, bis(triethoxysilyl)methane, bis(triethoxysilyl)propane, bis(trimethoxysilyl)propane, bis(triethoxysilyl)butane, bis(trimethoxysilyl)butane, bis(triethoxysilyl)pentane, bis(trimethoxysilyl)pentane, bis(triethoxysilyl)hexane, bis(trimethoxysilyl)hexane, bis(trimethoxysilyl)-N-butyl-N-propyl-ethane-1,2-diamine, tris-(3-trimethoxysilylpropyl)isocyanurate, and tris-(3-triethoxysilylpropyl)isocyanurate. The amount of the crosslinking assisting agent to be added is not limited to particular amounts and is, for example, from 0.01 to 20 wt%, from 0.05 to 15 wt%, or from 0.1 to 10 wt%, relative to the weight of the pulverized products of the silicon compound.

The chemical reaction in the presence of the catalyst can be caused by, for example: subjecting the coating film containing the catalyst or the catalyst generator previously added to the gel pulverized product-containing liquid to light irradiation or heating; subjecting the coating film to light irradiation or heating after spraying the catalyst over the coating film; or subjecting the coating film to light irradiation or heating while spraying the catalyst or the catalyst generator over the coating film. When the catalyst is a photoactive catalyst, the porous silicone material can be formed by chemically bonding the microporous particles to each other by light irradiation. When the catalyst is a thermoactive catalyst, the porous silicone material can be formed by chemically bonding the microporous particles to each other by heating. The

irradiation dose (energy) in the above irradiation is not limited to particular amounts and is, for example, from 200 to 800 mJ/cm$^2$, from 250 to 600 mJ/cm$^2$, or from 300 to 400 mJ/cm$^2$, in terms of light at a wavelength of 360 nm. The accumulated amount of light preferably is 200 mJ/cm$^2$ or more, from the viewpoint of preventing the problem in that, owing to insufficient irradiation dose, degradation of the catalyst generator by light absorption may not proceed sufficiently, so that the catalyst generator cannot exhibit its effect sufficiently. The accumulated amount of light preferably is 800 mJ/cm2 or less, from the viewpoint of preventing damage to the base disposed under the void-containing layer so as to prevent the formation of heat wrinkles. The wavelength of light in the irradiation is not limited to particular wavelengths and is, for example, from 200 to 500 nm, from 300 to 450 nm. The irradiation time in the irradiation is not limited to particular times and is, for example, from 0.1 to 30 minutes, from 0.2 to 10 minutes, or from 0.3 to 3 minute. The conditions for the heat treatment are not limited to particular conditions. The heating temperature is from 50°C to 250°C, from 60°C to 150°C, or from 70°C to 130°C, for example, and the heating time is from 0.1 to 30 minutes, from 0.2 to 10 minutes, or from 0.3 to 3 minutes, for example. It is preferable to use, for example, a solvent having a low surface tension for the purpose of inhibiting the shrinkage stress that may occur as the solvent volatizes during the drying process and inhibiting a crack phenomenon in the void-containing layer caused by the shrinkage stress. Examples of the solvent include, but are not limited to, lower alcohols typically, isopropyl alcohol (IPA), hexane, and perfluorohexane.

A porous silicone material can be produced in the above-described manner. Hereinafter, the porous silicone material to be produced in the above-described manner is also referred to as "porous silicone material according to the present invention". The method for producing a porous silicone material according to the present invention, however, is by no means limited thereby. The porous silicone material according to the present invention is, as mentioned above, a kind of the low refractive index layer according to the present invention.

The obtained porous silicone material according to the present invention may be subjected to a strength improving step of improving the strength (this step also may be referred to as an "aging step" hereinafter) through thermal aging or the like, for example. For example, when the porous silicone material according to the present invention is laminated on a base layer made of a resin film, the peel adhesion strength on the resin film (base layer) can be improved by the strength improving step (aging step). In the strength improving step (aging step), the porous silicone material according to the present invention may be heated, for example. The temperature of the aging step is from 40°C to 80°C, from 50°C to 70°C, or from 55°C to 65°C, for example. The reaction time is, for example, from 5 to 30 hours, from 7 to 25 hours, or from 10 to 20 hours. By setting the heating temperature to be low in the aging step, for example, the peel adhesion strength can be improved while inhibiting the shrinkage of the porous silicone material, so that the porous silicone material can attain both a high void fraction and a high strength.

Although the phenomenon occurring in the strength improving step (aging step) and the mechanism thereof are unknown, it is considered that, for example, the catalyst contained in the porous silicone material according to the present invention causes the chemical bonding (e.g., a crosslinking reaction) of the microporous particles to further proceed, thereby improving the strength. As a specific example, when residual silanol groups (OH groups) are present in the porous silicone material, it is considered that the residual silanol groups are chemically bonded to each other through a crosslinking reaction. The catalyst contained in the porous silicone material according to the present invention is not limited to particular catalysts, and may be, for example, a catalyst used in the bonding step, a basic substance generated by a photobase generation catalyst used in the bonding step when the photobase generation catalyst is subjected to light irradiation, or an acidic substance generated by a photoacid generation catalyst used in the bonding step when the photoacid generation catalyst is subjected to light irradiation. It is to be noted, however, that this explanation is merely illustrative and does not limit the present invention.

A pressure-sensitive adhesive/adhesive layer further may be formed on the porous silicone material according to the present invention (pressure-sensitive adhesive/adhesive layer lamination step). Specifically, the pressure-sensitive adhesive/adhesive layer may be formed by applying (coating) a pressure-sensitive adhesive or an adhesive to the porous silicone material according to the present invention, for example. Alternatively, the pressure-sensitive adhesive/adhesive layer may be formed on the porous silicone material according to the present invention by adhering, e.g., an adhesive tape including a base and the pressure-sensitive adhesive/adhesive layer laminated on the base to the porous silicone material with the pressure-sensitive adhesive/adhesive layer side of the adhesive tape facing the porous silicone material. In this case, the base of the adhesive tape may be left on the adhesive tape or may be peeled off from the pressure-sensitive adhesive/adhesive layer. In the present invention, a pressure-sensitive adhesive or an adhesive for forming the pressure-sensitive adhesive/adhesive layer is not limited to particular adhesives, and a commonly used pressure-sensitive adhesive or adhesive can be used, for example. Examples of the pressure-sensitive adhesive or the adhesive include: polymer adhesives such as acrylic adhesives, vinyl alcohol adhesives, silicone adhesives, polyester adhesives, polyurethane adhesives, and polyether adhesives; and rubber adhesives. Examples of the pressure-sensitive adhesive or the adhesive further include adhesives composed of water-soluble crosslinking agent for vinyl alcohol-based polymers, such as glutaraldehyde, melamine, and oxalic acid. Only one type of pressure-sensitive adhesive and adhesive may be used, or two or more types of pressure-sensitive adhesives or adhesives may be used in combination (e.g., they may be mixed together or may be laminated). The thickness of the pressure-sensitive adhesive/adhesive layer is not limited

to particular thicknesses and is, for example, from 0.1 to 100 μm, from 5 to 50 μm, from 10 to 30 μm, or from 12 to 25 μm.

Further, an intermediate layer may be formed between the porous silicone material according to the present invention and the pressure-sensitive adhesive/adhesive layer by causing the porous silicone material according to the present invention to react with the pressure-sensitive adhesive/adhesive layer (an intermediate layer forming step). The intermediate layer allows the porous silicone material according to the present invention to be less liable to be peeled off from the pressure-sensitive adhesive/adhesive layer, for example. Although the reason (mechanism) for this is unknown, it is speculated that the above effect is brought about by the anchoring property (anchor effect) of the intermediate layer, for example. The anchoring property (anchor effect) is a phenomenon (effect) that the interface between the void-containing layer and the intermediate layer is fixed firmly because the intermediate layer is entangled in the void-containing layer in the vicinity of the interface. It is to be noted, however, that the above-described reason (mechanism) merely is an example of the reason (mechanism) based on speculation and does not limit the present invention by any means. The reaction between the porous silicone material according to the present invention and the pressure-sensitive adhesive/adhesive layer is not limited to particular reactions, and may be a reaction caused by a catalyst, for example. The catalyst may be a catalyst contained in the porous silicone material according to the present invention, for example. Specifically, the catalyst may be, for example, a catalyst used in the bonding step, a basic substance generated by a photobase generation catalyst used in the bonding step when the photobase generation catalyst is subjected to light irradiation, or an acidic substance generated by a photoacid generation catalyst used in the bonding step when the photoacid generation catalyst is subjected to light irradiation. The reaction between the porous silicone material according to the present invention and the pressure-sensitive adhesive/adhesive layer may be, for example, a reaction (e.g., a crosslinking reaction) that newly generates chemical bonds. The reaction temperature is, for example, from 40°C to 80°C, from 50°C to 70°C, or from 55°C to 65°C. The reaction time is, for example, from 5 to 30 hours, from 7 to 25 hours, or from 10 to 20 hours. This intermediate layer forming step may also serve as the strength improving step (aging step) of improving the strength of the porous silicone material according to the present invention.

For example, as shown in FIGs. 1 and 2, the porous silicone material according to the present invention obtained in this manner may be further laminated on another layer to form a laminated structure including the porous structure, for example. In this case, the respective components of the laminated structure may be laminated via a pressure-sensitive adhesive or an adhesive, for example.

The respective components may be laminated by continuous processing using a long film (e.g., the so-called "roll-to-roll" process) in terms of efficiency, for example. When the base is a molded product, an element, or the like, the components that have been subjected to batch processing may be laminated on the base.

In the low refractive index layer according to the present invention, for example, an abrasion resistance of the low refractive index layer measured with BEMCOT® and indicating a film strength is from 60% to 100%, and a folding endurance of the low refractive index layer measured by an MIT test and indicating a flexibility is 100 times or more.

The low refractive index layer according to the present invention uses pulverized products of the porous gel material, for example. Thus, the three-dimensional structure of the porous gel material is destroyed, whereby a new three-dimensional structure different from that of the porous gel material is formed. As described above, the low refractive index layer according to the present invention becomes a layer having a new pore structure (new void-containing structure) that cannot be obtained in a layer formed using the porous gel material. That is, a nano-scale low refractive index layer having a high void fraction can be formed. Moreover, for example, when the low refractive index layer according to the present invention is a porous silicone material, the pulverized products in the low refractive index layer are chemically bonded to each other while adjusting the number of functional groups having siloxane bonds of the silicon compound gel, for example. Furthermore, a new three-dimensional structure is formed as a precursor of the low refractive index layer, and pulverized products are thereafter bonded chemically (e.g., crosslinked) to each other in the bonding step. Thus, when the low refractive index layer according to the present invention is a low refractive index layer, the low refractive index layer has a structure with void spaces, for example. However, it can maintain a sufficient strength and sufficient flexibility.

For example, the low refractive index layer according to the present invention includes pulverized products of a porous gel material as mentioned above, and the pulverized products are chemically bonded to each other. In the low refractive index layer according to the present invention, the form of the chemical bonding (chemical bonds) between the pulverized products is not limited to particular forms. Specifically, the chemical bonds may be crosslinking bonds, for example. The method for chemically bonding the pulverized products to each other is described below in detail in connection with the method for producing the low refractive index layer to be described below.

The crosslinking bonds are siloxane bonds, for example. Examples of the siloxane bonds include T2, T3, and T4 bonds shown below. When the porous silicone material of the present invention includes siloxane bonds, the porous silicone material may include any one of the T2, T3, and T4 bonds, any two of them, or all three of them, for example. As the proportions of T2 and T3 among the siloxane bonds become higher, the porous silicone material becomes more flexible, so that it is expected that the porous silicone material exhibits characteristics intrinsic to the gel. However, the film strength of the porous silicone material is deteriorated. When the proportion of T4 in the siloxane bonds becomes

higher, a film strength is more likely to be obtained, whereas void spaces become smaller, resulting in deteriorated flexibility. Thus, it is preferable to adjust the proportions of T2, T3, and T4 depending on the intended use of the porous silicone material, for example.

T2

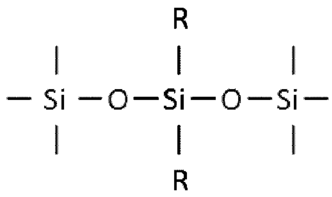

T3

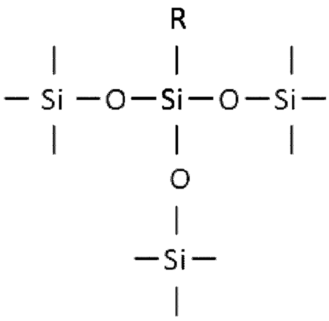

T4

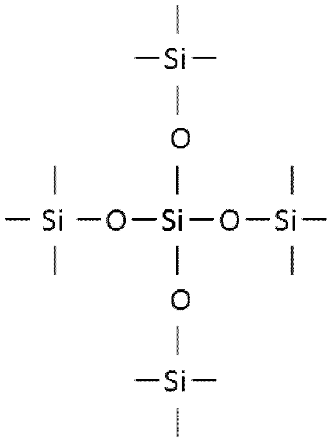

In the case where the low refractive index layer according to the present invention incudes the siloxane bonds, the ratio of T2, T3, and T4 expressed relatively assuming that the proportion of T2 is "1" is as follows, for example: T2 : T3 : T4 = 1 :[1 to 100] :[0 to 50], 1 :[1 to 80] :[1 to 40], or 1 :[5 to 60] :[1 to 30].

It is preferable that silicon atoms contained in the low refractive index layer according to the present invention are bonded to each other through siloxane bonds, for example. As a specific example, the proportion of unbonded silicon atoms (i.e., residual silanol) among all the silicon atoms contained in the porous silicone material is less than 50%, 30% or less, or 15% or less, for example.

The low refractive index layer according to the present invention has a pore structure, for example. The size of each void space in the pore structure indicates, out of the diameter of the long axis and the diameter of the short axis of the void space (pore), the diameter of the long axis. The size of the void space is from 5 nm to 200 nm, for example. The lower limit of the size is, for example, from 5 nm or more, 10 nm or more, or 20 nm or more. The upper limit thereof is, for example, from 1000 μm or less, 500 μm or less, or 100 μm or less. The range thereof is, for example, from 5 nm to 1000 μm, from 10 nm to 500 μm, from 20 nm to 100 μm. A preferable size of the void spaces is determined depending on the use of the void-containing structure. Thus, it is necessary to adjust the size of the void spaces to a desired value according to the intended use, for example. The size of the void spaces can be evaluated in the following manner, for example.

(Evaluation of size of void spaces)

In the present invention, the size of the void spaces can be quantified according to the BET test. Specifically, 0.1 g of a sample (the low refractive index layer according to the present invention) is set in a capillary tube of a surface area measurement apparatus (ASAP 2020, manufactured by Micromeritics), and dried under reduced pressure at room temperature for 24 hours to remove gas in the void-containing structure. Then, an adsorption isotherm is created by causing the sample to adsorb nitrogen gas, whereby the pore distribution is determined. On the basis of the thus-determined pore distribution, the size of the void spaces can be evaluated.

As mentioned above, the abrasion resistance of the low refractive index layer according to the present invention measured with BEMCOT® and indicating the film strength is from 60% to 100%, for example. With the film strength in the above-described range, the low refractive index layer according to the present invention has superior abrasion resistance in various processes, for example. The low refractive index layer according to the present invention has scratch resistance during a winding operation after production and handling of the produced low refractive index layer in production processes, for example. In addition, for example, the low refractive index layer according to the present invention can increase the particle sizes of pulverized products of the silicon compound gel and a bonding force in the neck portion where pulverized products are bonded, utilizing a catalyst reaction in a heating process to be mentioned below, instead of reducing a void fraction. Accordingly, the low refractive index layer according to the present invention can provide a certain level of strength to a void-containing structure which is originally weak, for example.

The lower limit of the abrasion resistance is, for example, 60% or more, 80% or more, or 90% or more. The

upper limit of the abrasion resistance is, for example, 100% or less, 99% or less, or 98% or less. The range of the abrasion resistance is, for example, from 60% to 100%, from 80% to 99%, or from 90% to 98%.

The abrasion resistance can be measured in the following manner, for example.

(Evaluation of abrasion resistance)

(1) From a void-containing layer (the low refractive index layer according to the present invention) formed on an acrylic film by coating, a circular cut piece with a diameter of about 15 mm is cut out as a sample.

(2) Next, regarding the sample, the coating amount of Si ($Si_0$) is measured by identifying silicon using an X-ray fluorescence spectrometer (ZSX Primus II, manufactured by Shimadzu Corporation). Next, a cut piece with a size of 50 mm × 100 mm is cut out from the void-containing layer on the acrylic film. This cut piece is cut out from a vicinity of the site where the circular cut piece was obtained. The obtained cut piece is fixed onto a glass plate (thickness: 3 mm), and a sliding test is performed using BEMCOT®. The sliding conditions are as follows: weight: 100 g, reciprocation: 10 times.

(3) Regarding the void-containing layer having been subjected to the sliding, the sampling and the X-ray fluorescence measurement are performed in the same manner as in the above item (1) to measure the residual amount of Si (Si1) after the abrasion test. The abrasion resistance is defined as the residual ratio of Si (%) before and after the sliding test performed using the BEMCOT®, and is represented by the following formula:

$$\text{Abrasion resistance (\%)} = [\text{the residual amount of Si } (Si_1)/\text{the coating amount of Si } (Si_0)] \times 100\ (\%).$$

The folding endurance of the porous silicone material according to the present invention measured by the MIT test and indicating the flexibility is, for example, 100 times or more, as described above. With the flexibility in the above-described range, the low refractive index layer according to the present invention exhibits superior handleability during a winding operation in a continuous production process and in use, for example.

The lower limit of the folding endurance is, for example, 100 times or more, 500 times or more, or 1000 times or more. The upper limit of the folding endurance is not limited to particular endurance, and is, for example, 10000 times or less. The range of the folding endurance is, for example, from 100 to 10000 times, from 500 to 10000 times, or from 1000 to 10000 times.

The term "flexibility" means the deformability of a substance, for example. The folding endurance can be measured by the MIT test in the following manner, for example.

(Evaluation by folding endurance test)

The void-containing layer (the low refractive index layer according to the present invention) is cut into a strip-shaped cut piece with a size of 20 mm × 80 mm. The thus-obtained cut piece is set in an MIT folding endurance tester (BE-202, manufactured by TESTER SANGYO CO., LTD.), and 1.0 N load is applied thereto. As a chuck portion for holding the void-containing layer, R 2.0 mm is used, and the load is applied 10000 times at most. The number of times of the load application at which the void-containing layer is fractured is determined as the folding endurance.

The film density of the low refractive index layer according to the present invention is not limited to particular densities. The lower limit of the film density is, for example, 1 g/cm$^3$ or more, 10 g/cm$^3$ or more, 15 g/cm$^3$ or more. The upper limit of the film density is, for example, 50 g/cm$^3$ or less, 40 g/cm$^3$ or less, or 30 g/cm$^3$ or less, or 2.1 g/cm$^3$ or less. The range of the film density is, for example, from 5 to 50 g/cm$^3$, from 10 to 40 g/cm$^3$, from 15 to 30 g/cm$^3$, or from 1 to 2.1 g/cm$^3$.

The film density can be measured in the following manner, for example.

(Evaluation of film density)

A void-containing layer (the low refractive index layer according to the present invention) is formed on an acrylic film. Thereafter, regarding the void-containing layer, the X-ray reflectance in a total reflection region is measured using an X-ray diffractometer (RINT-2000, manufactured by RIGAKU). Then, after fitting with Intensity at 2θ, the porosity (P%) is calculated from the total reflection critical angle of the void-containing layer and the base. The film density can be calculated by the following formula:

$$\text{Film density (\%)} = 100\ (\%) - \text{Porosity (P\%)}.$$

The low refractive index layer according to the present invention may have, for example, a pore structure (porous structure) as mentioned above, and the pore structure may be an open-cell structure in which pores are interconnected with each other, for example. The open-cell structure means that, for example, in the low refractive index layer, pores three-dimensionally communicate with each other. In other words, the open-cell structure means the state where void spaces inside the pore structure are interconnected with each other. When a porous material has an open-cell structure, this structure allows the bulk body to have a higher void fraction. However, in the case where closed-cell particles such as hollow silica particles are used, an open-cell structure cannot be formed. In contrast, in the low refractive index layer according to the present invention, an open-cell structure can be formed easily for the following reason. When sol particles (pulverized products of a porous gel material for forming a sol) each have a dendritic structure, so that the open-cell structure is formed as a result of sedimentation and deposition of the dendritic particles in a coating film (a coating film formed of a sol containing pulverized products of the porous gel material). Further, it is more preferable that the low refractive index layer according to the present invention forms a monolith structure, which is an open-cell structure including two or more types of micropore distributions. The monolith structure refers to a layered structure including a structure in which nano-sized void spaces are present and an open-cell structure formed by aggregation of the nano-sized spaces, for example. When the monolith structure is formed, for example, the film strength is imparted by the minute void spaces whereas a high void fraction is achieved by the presence of the void spaces forming a bulky open-cell structure. Thus, both a film strength and a high void fraction can be attained. In order to form such a monolith structure, for example, first, in the porous gel material before being pulverized into the pulverized products, it is preferable to control the micropore distributions in a void-containing structure to be generated. Also, the monolith structure can be formed by, for example, controlling, at the time of pulverizing the porous gel material, the particle sizes of the pulverized products so that a desired particle size distribution can be obtained.

In the low refractive index layer according to the present invention, the tearing crack growth rate which represents flexibility is not limited to particular rates. The lower limit of the tearing crack growth rate is, for example, 0.1% or more, 0.5% or more, and the upper limit of the tearing crack growth rate is, for example, 3% or less. The range of the tearing crack growth rate is, for example, from 0.1% to 3%, from 0.5% to 3%, from 1% to 3%.

The tearing crack growth rate can be measured in the following manner, for example.

(Evaluation of tearing crack growth rate)

A void-containing layer (the low refractive index layer according to the present invention) is formed on an acrylic film, and a strip-shaped piece with a size of 5 mm × 140 mm is then obtained as a sample from the thus-obtained laminate. The sample is fixed to a stainless plate with a double-sided tape. Then, the sample is chucked in a tensile testing machine (AG-Xplus, manufactured by Shimadzu Corporation) with a distance between chucks being 100 mm, and the tensile test is performed at a tensile speed of 0.1 m/min. The sample during the test is carefully observed, and the test is finished at the time when cracking of a part of the sample occurs, and the growth rate (%) at the time when the cracking occurs is regarded as the tearing crack growth rate.

In the low refractive index layer according to the present invention, the haze value indicating the transparency is not limited to particular hazes. The lower limit of the haze is, for example, 0.1% or more, 0.2% or more, or 0.3% or more. The upper limit of the haze is, for example, 10% or less, 5% or less, or 3% or less. The range of the haze value is, for example, from 0.1% to 10%, from 0.2% to 5%, from 0.3% to 3%.

The haze value can be measured in the following manner, for example.

(Evaluation of haze value)

A void-containing layer (the low refractive index layer according to the present invention) is cut into a piece with a size of 50 mm × 50 mm, and the thus-obtained cut piece is set in a hazemeter (HM-150, manufactured by product of Murakami Color Research Laboratory) to measure the haze value. The haze value is calculated by the following formula:

$$\text{Haze value (\%)} = [\text{diffuse transmittance (\%)}/\text{total light transmittance (\%)}] \times 100\ (\%).$$

The thickness of the low refractive index layer according to the present invention is not limited to particular thicknesses. The lower limit of the thickness is, for example, 0.05 m or more or 0.1 m or more. The upper limit of the thickness is, for example, 1000 μm or less or 100 μm or less. The range of the thickness is, for example, from 0.05 to 1000 μm or from 0.1 to 100 μm.

[2. Optical laminate intermediate and production method thereof]

The following describes examples of an optical laminate intermediate according to the present invention and a production method thereof.

As mentioned above, the optical laminate intermediate according to the present invention includes: a base layer; a pressure-sensitive adhesive/adhesive layer; and a protective layer, the pressure-sensitive adhesive/adhesive layer and the protective layer being laminated on the base layer in this order, and the optical laminate intermediate is for use in production of an optical laminate by providing asperities on a surface of the base layer opposite to a surface on which the pressure-sensitive adhesive/adhesive layer is laminated. An example of such optical laminate intermediate according to the present invention includes, as mentioned above, the optical laminate intermediate shown in FIG. 1B or 2C. The overview of the method for producing the optical laminate intermediate also is as mentioned above. The following describes the optical laminate intermediate according to the present invention and the production method thereof in further detail. In the following, the description is directed to the case where the optical laminate intermediate according to the present invention has a low refractive index layer that is a porous silicone material. The optical laminate intermediate according to the present invention and the production method thereof, however, is by no means limited thereby.

The following describes an example of the optical laminate intermediate according to the present invention and the production method thereof with reference to FIGs. 3 to 5. In this example, a porous silicone material (a low refractive index layer according to the present invention) is formed on a base layer using a gel pulverized product-containing liquid, and a pressure-sensitive adhesive/adhesive layer and a protective layer are then laminated thereon in this order. FIGs. 4 and 5 show, after the film formation of a porous silicone material, the steps of attaching a pressure-sensitive adhesive/adhesive layer and a protective film (protective layer) to the thus-formed film and winding up the thus-obtained laminate. It should be noted that the film forming processes shown in FIGs. 3 to 5 are merely illustrative and do not limit the present invention by any means.

FIG. 3 shows cross-sectional views schematically illustrating an example of a process of a method for producing the porous silicone material on the base layer. In FIG. 3, the method for forming a porous silicone material includes: a coating step (1) of coating a gel pulverized product-containing liquid 20" according to the present invention onto a base layer 10; a coating film forming step (drying step) (2) of drying the gel pulverized product-containing liquid 20" to form a coating film 20', which is a precursor layer of the porous silicone material; a chemical treatment step (e.g., crosslinking step of performing a crosslinking treatment) (3) of subjecting the coating film 20' to a chemical treatment (e.g., crosslinking treatment) to form a porous silicone material 20; a pressure-sensitive adhesive/adhesive layer coating step (pressure-sensitive adhesive/adhesive layer lamination step) (4) of coating (laminating) a pressure-sensitive adhesive/adhesive layer 30 onto the porous silicone material 20; and a protective layer lamination step (5) of laminating a protective layer 40 onto the pressure-sensitive adhesive/adhesive layer 30. An optical laminate intermediate can be produced in the above-described manner as shown in FIG. 3. The structure of this optical laminate intermediate is the same as that of the optical laminate intermediate of FIG. IB. Further, for example, prior to the coating step (1), an undercoat layer 11 may be coated (laminated) on the base layer 10 as shown in FIG. 2B.

In the coating step (1), the method for coating the gel pulverized product-containing liquid 20" is not limited to particular methods, and a commonly used coating method can be employed. Examples of the coating method include a slot die method, a reverse gravure coating method, a micro-gravure method (micro-gravure coating method), a dip method (dip coating method), a spin coating method, a brush coating method, a roller coating method, a flexography, a wire-bar coating method, a spray coating method, an extrusion coating method, a curtain coating method, and a reverse coating method. Among them, from the viewpoint of productivity, smoothness of a coating film, etc., the extrusion coating method, the curtain coating method, the roller coating method, and the micro-gravure coating method are preferable. The coating amount of the gel pulverized product-containing liquid 20" is not limited to particular amounts and can be set as appropriate so that the porous structure (porous silicone material) 20 having a suitable thickness is obtained, for example. The thickness of the porous structure (porous silicone material) 20 is not limited to particular thicknesses, and is as mentioned above, for example.

In the drying step (2), the gel pulverized product-containing liquid 20" is dried (i.e., a dispersion medium contained in the gel pulverized product-containing liquid 20" is removed) to form the coating film (precursor layer) 20'. The conditions for the drying treatment are not limited to particular conditions, and may be as described above, for example.

In the chemical treatment step (3), the coating film 20' containing a catalyst (e.g., a photoactive catalyst, a photocatalyst generator, thermoactive catalyst, or a thermal catalyst generator) added prior to the coating step is irradiated with light or heated, whereby the pulverized products in the coating film (precursor layer) 20' are chemically bonded (e.g., crosslinked) to each other. As a result, the porous silicone material 20 is formed. The conditions for the light irradiation and heating in the chemical treatment step (3) are not limited to particular conditions, and may be as described above, for example.

The pressure-sensitive adhesive/adhesive layer coating step (pressure-sensitive adhesive/adhesive layer lamination step) (4) and the protective layer lamination step (5) are not limited to particularly steps, and are performed

according to, for example, the commonly used method for producing an optical laminate, as mentioned above. For example, these steps can be performed by the method shown in FIG. 4 or 5.

FIG. 4 schematically shows an example of a slot die coating apparatus and the method for forming the optical laminate intermediate. While FIG. 4 is a cross-sectional view, hatching is omitted for the sake of clarity.

As shown in FIG. 4, the respective steps in the method using this apparatus are performed while conveying a base layer (base film) 10 in one direction by rollers. The conveyance speed is not limited to particular speeds, and is, for example, from 1 to 100 m/min, from 3 to 50 m/min, or from 5 to 30 m/min.

First, while feeding and conveying the base layer (base film) 10 from a delivery roller 101, a coating step (1) of coating a gel pulverized product-containing liquid 20" according to the present invention onto the base layer 10 is performed on a coating roller 102. Subsequently, in an oven zone 110, a drying step (2) is performed. In the coating apparatus shown in FIG. 2, a pre-drying step is performed after the coating step (1) and prior to the drying step (2). The pre-drying step can be performed at room temperature without heating. In the drying step (2), heating units 111 are used. As the heating unit 111, a hot air fan, a heating roll, a far-infrared heater, or the like can be used as appropriate, as mentioned above. Also, for example, the drying step (2) may be divided into two or more steps, and the drying temperatures in the respective steps may be set so that the drying temperature in the first step increases toward the step(s) subsequent thereto.

After the drying step (2), a chemical treatment step (3) is performed in a chemical treatment zone 120. In the chemical treatment step (3), when a coating film 20' after being dried contains a photoactive catalyst, for example, the coating film 20' is irradiated with light emitted from lamps (light irradiation units) 121 disposed above and below the base layer 10. On the other hand, when the coating film 20' after being dried contains a thermoactive catalyst, for example, hot air fans (heating units) are used instead of the lamps (light irradiation units) 121, and the base layer 10 is heated using the hot air fans 121 disposed above and below the base layer 10. By this crosslinking treatment, pulverized products in the coating film 20' are chemically bonded to each other, whereby a porous silicone material 20 is cured and strengthened.

Then, after the chemical treatment step (3), the pressure-sensitive adhesive/adhesive layer coating step (pressure-sensitive adhesive/adhesive layer lamination step) (4) of applying (coating) a pressure-sensitive adhesive or an adhesive to a porous silicone material 20 to form a pressure-sensitive adhesive/adhesive layer 30 is performed in the pressure-sensitive adhesive/adhesive layer coating zone 130a using pressure-sensitive adhesive/adhesive layer coating units 131a.

After the pressure-sensitive adhesive/adhesive layer coating step (4), the protective layer lamination step (5) is performed. In this step, as shown in FIG. 4, a protective layer (protective film) 40 fed and conveyed from a roll 106 is laminated on a pressure-sensitive adhesive/adhesive layer 30 to coat and protect the pressure-sensitive adhesive/adhesive layer 30. An optical laminate intermediate including a base layer (base film) 10 and a porous silicone material (low refractive index layer) 20, a pressure-sensitive adhesive/adhesive layer 30, and a protective layer (protective film) 40 being laminated on the base layer 10 in this order can be produced in the above-described manner. Then, the optical laminate intermediate produced is wound up by a winding roller 105 as shown in FIG. 4.

In the pressure-sensitive adhesive/adhesive layer lamination step (4), instead of applying (coating) the pressure-sensitive adhesive or the adhesive, an adhesive tape including the pressure-sensitive adhesive/adhesive layer 30 may be adhered (attached) to the porous silicone material 20, for example. In this case, the pressure-sensitive adhesive/adhesive layer lamination step (4) of laminating a pressure-sensitive adhesive/adhesive layer 30 and the protective layer lamination step (5) of laminating a protective layer 40 are performed in parallel.

The optical laminate intermediate wound up by the winding roller 105 can be used in production of an optical laminate. Production steps of the optical laminate may be performed as shown in FIGs. 1A to 1E or FIGs. 2D to 2F, for example, or may be performed continuously while feeding and conveying the optical laminate intermediate. For example, while feeding and conveying the optical laminate intermediate from a roller, asperities 10A may first be provided on a base layer 10, a protective layer (protective film) 40 may then be peeled off, and a brightness enhancement film 50, a light diffusion layer 60, and a polarizing plate 70 may thereafter be continuously laminated on a pressure-sensitive adhesive/adhesive layer 30 in this order. For example, the brightness enhancement film 50, the light diffusion layer 60, and the polarizing plate 70 may be continuously laminated while feeding and conveying a long brightness enhancement film, a long light diffusion layer, and a long polarizing plate. Further, the light diffusion layer 60 may be formed by continuously coating a light diffusible pressure-sensitive adhesive onto the brightness enhancement film 50, for example.

FIG. 5 schematically shows an example of a coating apparatus for a micro-gravure method (micro-gravure coating method) and the method for forming a porous structure using the same. While FIG. 5 is a cross-sectional view, hatching is omitted for the sake of clarity.

As shown in FIG. 5, the respective steps in the method using this apparatus are performed while conveying a base layer 10 in one direction by rollers, as in the example shown in FIG. 4. The conveyance speed is not limited to particular speeds, and is, for example, from 1 to 100 m/min, from 3 to 50 m/min, or from 5 to 30 m/min.

First, while feeding and conveying a base layer 10 from a delivery roller 201, a coating step (1) of coating a gel

pulverized product-containing liquid 20" onto the base layer 10 is performed. As shown in FIG. 5, the gel pulverized product-containing liquid 20" is coated using a liquid reservoir 202, a doctor (doctor knife) 203, and a micro-gravure coater 204. Specifically, the gel pulverized product-containing liquid 20" in the liquid reservoir 202 is caused to be carried on the surface of the micro-gravure coater 204, and is then coated on the surface of the base layer 10 with the micro-gravure coater 204 while controlling the thickness of the coating film of the gel pulverized product-containing liquid 20" to a predetermined thickness with the doctor 203. It is to be noted here that the micro-gravure coater 204 merely is an example of a coating unit. The coating unit is not limited to the micro-gravure coater 204, and any coating unit may be employed.

Next, a drying step (2) is performed. Specifically, as shown in FIG. 5, the base layer 10 having the gel pulverized product-containing liquid 20" coated thereon is conveyed to an oven zone 210. The gel pulverized product-containing liquid 20" is dried by being heated with heating units 211 disposed in the oven zone 210. The heating units 211 may be the same as the heating units 111 in FIG. 4, for example. The drying step (2) may be divided into a plurality of steps by dividing the oven zone 210 into a plurality of sections, for example. The drying temperatures in the respective steps may be set so that the drying temperature in the first step increases toward the step(s) subsequent thereto. After the drying step (2), a chemical treatment step (3) is performed in a chemical treatment zone 220. In the chemical treatment step (3), when a coating film 20' after being dried contains a photoactive catalyst, for example, the coating film 20' is irradiated with light emitted from lamps (light irradiation units) 221 disposed above and below the base layer 10. On the other hand, when the coating film 20' after being dried contains a thermoactive catalyst, for example, hot air fans (heating units) are used instead of the lamps (light irradiation units) 221, and the base layer 10 is heated using the hot air fans 221 disposed below the base layer 10. By this crosslinking treatment, pulverized products in the coating film 20' are chemically bonded to each other, whereby a porous silicone material 20 is formed.

Then, after the chemical treatment step (3), the pressure-sensitive adhesive/adhesive layer coating step (pressure-sensitive adhesive/adhesive layer lamination step) (4) of applying (coating) a pressure-sensitive adhesive or an adhesive to a porous silicone material 20 to form a pressure-sensitive adhesive/adhesive layer 30 is performed in the pressure-sensitive adhesive/adhesive layer coating zone 230a using pressure-sensitive adhesive/adhesive layer coating units 231a.

After the pressure-sensitive adhesive/adhesive layer coating step (4), the protective layer lamination step (5) is performed. In this step, as shown in FIG. 5, a protective layer (protective film) 40 fed and conveyed from a roll 252 is laminated on a pressure-sensitive adhesive/adhesive layer 30 to coat and protect the pressure-sensitive adhesive/adhesive layer 30. An optical laminate intermediate including a base layer (base film) 10 and a porous silicone material (low refractive index layer) 20, a pressure-sensitive adhesive/adhesive layer 30, and a protective layer (protective film) 40 being laminated on the base layer 10 in this order can be produced in the above-described manner. Then, the optical laminate intermediate produced is wound up by a winding roller 251 as shown in FIG. 5.

In the pressure-sensitive adhesive/adhesive layer lamination step (4), instead of applying (coating) the pressure-sensitive adhesive or the adhesive, a pressure-sensitive adhesive tape including the pressure-sensitive adhesive/adhesive layer 30 may be adhered (attached) to the porous silicone material 20, to perform the pressure-sensitive adhesive/adhesive layer lamination step (4) and the protective layer lamination step (5) in parallel.

The optical laminate intermediate wound up by the winding roller 251 can be used in production of an optical laminate in the same manner as in FIG. 4.

FIGs. 6 to 8 show still other examples of continuous processing steps in the method for forming the porous silicone material according to the present invention. As can be seen from the cross-sectional view of FIG. 6, the method shown in FIG. 6 includes, after a pressure-sensitive adhesive/adhesive layer coating step (pressure-sensitive adhesive/adhesive layer lamination step) (4) of coating a pressure-sensitive adhesive/adhesive layer 30 onto the porous silicone material 20, an intermediate layer forming step (4-2) of forming an intermediate layer 22 by causing the porous silicone material 20 to react with the pressure-sensitive adhesive/adhesive layer 30 and after the intermediate layer forming step (4-2), a protective layer lamination step (5). Except for the above, the methods shown in FIGs. 6 to 8 are the same as those shown in FIGs. 3 to 5, respectively. In FIGs. 6 to 8, the intermediate layer forming step (4-2) also serves as a step of improving the strength of the porous silicone material 20 (strength improving step). Thus, after the intermediate layer forming step (4-2), the porous silicone material 20 turns into a porous silicone material 21 with an improved strength. It is to be noted, however, that the present invention is not limited thereto, and it is not necessary that the porous silicone material 20 turns into the one with an improved strength after the intermediate layer forming step (4-2), for example. The intermediate layer forming step (4-2) is not limited to particular steps, and is as mentioned above, for example.

FIG. 7 is a schematic view showing still another example of a slot die coating apparatus and the method for forming a porous silicone material using the same. As can be seen from FIG. 7, the coating apparatus shown in FIG. 7 is the same as that shown in FIG. 4, except that it includes, right next to a pressure-sensitive adhesive/adhesive layer coating zone 130a in which a pressure-sensitive adhesive/adhesive layer coating step (4) is performed, an intermediate layer forming zone (aging zone) 130 in which an intermediate layer forming step (4-2) is performed. An intermediate

layer forming step (aging step) (4-2) is performed in the intermediate layer forming zone (aging zone) 130 to form an intermediate layer 22 by causing the porous silicone material 20 to react with a pressure-sensitive adhesive/adhesive 30. The intermediate layer forming step (aging step) (4-2) may be performed by heating the porous silicone material 20 in the same manner as mentioned above using hot air fans (heating units) 131 disposed above and below the base layer 10, for example. In this step, the porous silicone material 20 turns into a porous silicone material 21 with an improved strength, as mentioned above. The heating temperature, heating time, etc. of the heating by the hot air fans (heating units) 131 are not particularly limited, and are as mentioned above, for example.

FIG. 8 is a schematic view showing still another example of a coating apparatus for a micro-gravure method (micro-gravure coating method) and the method for forming a porous structure using the same. As can be seen from FIG. 8, the coating apparatus shown in FIG. 8 is the same as that shown in FIG. 5, except that it includes, right next to a pressure-sensitive adhesive/adhesive layer coating zone 230a in which a pressure-sensitive adhesive/adhesive layer coating step (4) is performed, an intermediate layer forming zone (aging zone) 230 in which an intermediate layer forming step (4-2) is performed. In FIG. 8, in an intermediate layer forming zone (aging zone) 230 provided right next to the pressure-sensitive adhesive/adhesive layer coating zone 230a, a heat treatment can be performed using hot air fans (heating units) 231 disposed above and below the base layer 10 in the same manner as the heat treatment performed in the strength improving zone (aging zone) 130 in FIG. 7. That is, in the coating apparatus shown in FIG. 8, after the chemical treatment step (3), the pressure-sensitive adhesive/adhesive layer coating step (pressure-sensitive adhesive/adhesive layer lamination step) (4) of applying (coating) a pressure-sensitive adhesive or an adhesive to a porous silicone material 20 to form a pressure-sensitive adhesive/adhesive layer 30 is performed in the pressure-sensitive adhesive/adhesive layer coating zone 230a using pressure-sensitive adhesive/adhesive layer coating units 231a. An intermediate layer forming step (aging step) (4-2) is performed in the intermediate layer forming zone (aging zone) 230 to form an intermediate layer 22 by causing the porous silicone material 20 to react with a pressure-sensitive adhesive layer 30. In this step, the porous silicone material 20 turns into a porous silicone material 21 with an improved strength, as mentioned above. The heating temperature, heating time, etc. of the heating by the hot air fans (heating units) 231 are not particularly limited, and are as mentioned above, for example.

In the pressure-sensitive adhesive/adhesive layer lamination step (4), instead of applying (coating) the pressure-sensitive adhesive or the adhesive, a pressure-sensitive adhesive tape including the pressure-sensitive adhesive/adhesive layer 30 may be adhered (attached) to the porous silicone material 20, to perform the pressure-sensitive adhesive/adhesive layer lamination step (4) and the protective layer lamination step (5) in parallel.

## Examples

The following describes the examples of the present invention. It is to be noted, however, that the present invention is by no means limited to the following examples.

### (Reference Example 1)

A low refractive index layer coating solution (gel pulverized product-containing liquid) that is a raw material of the low refractive index layer (porous silicone material) was produced by the following steps (1) to (6). That is, first, gelation of silicon compound (the following step (1)) and an aging step (the following step (2)) were performed to produce a gel (porous silicone material) having a porous structure. A gel formation control step (3), a solvent replacement step (4), a concentration measurement (concentration control) and concentration adjustment step (5), and a pulverization step (6) were further performed thereafter to obtain a gel pulverized product-containing liquid. In the present reference example, the gel formation step (3) was performed as a different step from the step (1) as described below. However, for example, the gel formation step (3) may be performed in the step (1).

### (1) Gelation of silicon compound

In 22 kg of DMSO, 9.5 g of a silicon compound precursor MTMS was dissolved. To the resultant mixture, 5 kg of 0.01 mol/L aqueous oxalic acid solution was added. The resultant mixture was stirred at room temperature for 120 minutes, whereby MTMS was hydrolyzed to generate tris(hydroxy)methylsilane.

To 55 kg of DMSO, 3.8 kg of ammonia water with an ammonia concentration of 28% and 2 kg of pure water were added. Thereafter, the above-described mixture that had been subjected to the hydrolysis treatment was further added thereto. The resultant mixture was stirred at room temperature for 60 minutes. After the stirring for 60 minutes, the mixture was introduced into a stainless container with a size of 30 cm in length × 30 cm in width × 5 cm in height and then stood still at room temperature, to cause gelation of tris(hydroxy)methylsilane. Thus, a gelled silicon compound was obtained.

(2) Aging step

The gelled silicon compound obtained by the above gelation treatment was subjected to an aging treatment by incubating it at 40°C for 20 hours. Thus, a rectangular gel mass was obtained. The amount of DMSO (a high-boiling-point solvent with a boiling point of 130°C or more) to be used in a raw material of this gel was about 83 wt% relative to the total amount of the raw material. Thus, it is obvious that this gel contains 50 wt% or more of the high-boiling-point solvent with a boiling point of 130°C or more. The amount of MTMS (a monomer as a structural unit of the gel) to be used in a raw material of this gel was about 8 wt% relative to the total amount of the raw material. Thus, it is obvious that this gel contains 20 wt% or less of a solvent (methanol in this case) with a boiling point of less than 130°C to be generated in hydrolysis of the monomer (MTMS) that is a monomer as a structural unit of the gel.

(3) Gel form control step

Isobutyl alcohol that is a replacement solvent was introduced on the gel synthesized in a stainless container with a size of 30 cm in length × 30 cm in width × 5 cm in height by the steps (1) and (2). Then, a cutting blade of a cutting tool was slowly inserted into the gel in the stainless container from the top to cut the gel into rectangular pieces each with a size of 1.5 cm × 2 cm × 5 cm.

(4) Solvent replacement step

Further, the cut gel pieces were transferred into another container, and a solvent replacement where 4 times the amount of the isobutyl alcohol to the gel in terms of volume ratio was introduced into the container while retaining the shape of the gel, the container is then stood still for 6 hours, and the solvent is replaced was repeatedly performed for a total of 4 times.

(5) Concentration measurement (concentration control) and concentration adjustment step

After the solvent replacement step (4), block-shaped gel pieces were taken out, and the solvent adhered to the periphery of each gel piece was removed. Thereafter, the concentration of the solid content in one block-shaped gel piece was measured by weight dry method. In the measurement, the concentration of the solid content in each of six block-shaped gel pieces was measured, and a variation of the measured concentrations from the average thereof were calculated, to determine reproducibility of the measured concentrations. The average of the concentrations of the solid content in the respective six gel pieces was 5.20 wt%, variations of the concentrations in six gel pieces were within ±0.1%. Based on the measured concentrations, the concentration of solid content in the gel was adjusted to be about 3.0 wt% by adding isobutyl alcohol as a solvent.

(6) Pulverization step

The gel (gelled silicon compound) obtained after the concentration measurement (concentration control) and concentration adjustment step (5) was subjected to a total of two stages of pulverization including a first pulverization stage by continuous emulsification dispersion (Milder MDN304, manufactured by Pacific Machinery & Engineering Co., Ltd.) and a second pulverization stage by high pressure media-less pulverization (Star Burst HJP-25005, manufactured by Sugino Machine Limited). This pulverization treatment was performed in the following manner. First, 43.4 kg of the gel after being subjected to solvent replacement was prepared. This gel is a gelled silicon compound containing a solvent. 26.2 kg of isobuyl alcohol was added to 43.4 kg of this gel after being subjected to solvent replacement, and the mixture was then weighed. Thereafter, the mixture was subjected to a first pulverization stage by closed-circuit pulverization for 20 minutes and the second pulverization stage at a pulverization pressure of 100 MPa. Thus, a dispersion liquid (gel pulverized product-containing liquid) of nanometer-sized particles (pulverized products of the gel) in isobutyl alcohol was obtained. This gel pulverized product-containing liquid was used in the following examples as an intended low refractive index layer coating solution.

The concentration of the solid content (the concentration of the gel) in the liquid (high-velocity, pulverized gel-containing liquid) measured after the first pulverization stage (coarse pulverization stage) and before the second pulverization stage (nano-pulverization stage) was 3.01 wt%. After the first pulverization stage (coarse pulverization stage) and before the second pulverization stage (nano-pulverization stage), the volume average particle diameter of the pulverized products of the gel was 3 to 5 μm, and the shear velocity of the liquid was 4000 mPa•s. At that time, the high-velocity, pulverized gel-containing liquid was not solid-liquid separated due to its high velocity and could be handled as a homogeneous liquid, whereby the numerical values measured after the first pulverization stage (coarse pulverization stage) were employed as they were. After the second pulverization stage (nano-pulverization stage), the volume average

particle diameter of the pulverized products of the gel was 250 to 350 nm, and the shear velocity of the liquid was 5 to 10 mPa•s. The concentration of the solid content (the concentration of the gel) in the liquid (gel pulverized product-containing liquid) measured again after the second pulverization stage (nano-pulverization stage) was 3.01 wt%, which was the same as that measured after the first pulverization stage (coarse pulverization stage).

In the present reference example, the average particle diameter of pulverized products (sol particles) of the gel after the first pulverization stage and the second pulverization stage was measured by a dynamic light scattering Nanotrac particle size analyzer (trade name: UPA-EX150, manufactured by NIKKISO CO., LTD.). In the present reference example, the shear velocity of the liquid after the first pulverization stage and before the second pulverization stage was measured by a vibration-type viscometer (trade name: FEM-1000V, manufactured by SEKONIC CORPORATION). The same applies to the following examples and comparative example.

The proportion of functional groups (residual silanol groups) that are not involved in a crosslinked structure inside the gel among functional groups (silanol groups) of structural unit monomers of the solid content (gel) in the gel pulverized product-containing liquid, measured after the first pulverization step (coarse pulverization stage) was 11 mol%. The proportion of functional groups (residual silanol groups) that are not involved in a crosslinked structure inside the gel was measured by the method where the gel after drying is subjected to a solid state NMR (Si-NMR), and the proportion of residual silanol groups that are not involved in a crosslinked structure is calculated from the peak ratio obtained by the NMR.

(Example 1)

The low refractive index layer coating solution (gel pulverized product-containing liquid) produced in Reference Example 1 was coated on an acrylic base with a thickness of 40 μm, thereby forming a low refractive index layer coating solution with a thickness of 800 nm. Thereafter, a pressure-sensitive adhesive with a thickness of 25 μm having a pressure-sensitive adhesive protective film (separator) with a thickness of 75 μm was adhered to the surface of the low refractive index layer. Thus, a low refractive index layer-including laminate (optical laminate intermediate) with a total thickness of 141 μm, including the base layer (acrylic base) and the low refractive index layer, a pressure-sensitive adhesive/adhesive layer (pressure-sensitive adhesive), and a protective layer (pressure-sensitive adhesive protective film) being laminated in this order was obtained. In this low refractive index layer-including laminate (optical laminate intermediate), the proportion of the thickness of the base layer in the total thickness was about 28%.

Further, the surface of the acrylic base in the low refractive index layer-including laminate (optical laminate intermediate), opposite to the low refractive index layer side (the surface on which the pressure-sensitive adhesive/adhesive layer had been laminated) was deformed according to the method of JP 2015-173066 (Dai Nippon Printing Co., Ltd.), thereby providing prism-shaped asperities (asperities). At that time, the prism-shaped asperities could be provided on the acrylic base without any problem.

(Example 2)

A low refractive index layer-including laminate (optical laminate intermediate) with a total thickness of 121 μm was obtained in the same manner as in Example 1, except that the thickness of the acrylic base was 20 μm. In this low refractive index layer-including laminate (optical laminate intermediate), the proportion of the thickness of the base layer in the total thickness was about 17%.

Further, prism-shaped asperities (asperities) were provided on the low refractive index layer-including laminate (optical laminate intermediate) in the same manner as in Example 1. At that time, the prism-shaped asperities could be provided on the acrylic base as in Example 1 without any problem even through the thickness of the acrylic base was smaller than that in Example 1.

(Example 3)

A low refractive index layer-including laminate (optical laminate intermediate) with a total thickness of 71 μm was obtained in the same manner as in Example 1, except that the thickness of the acrylic base was 20 μm, the thickness of the pressure-sensitive adhesive protective film (separator) was 38 μm, and the thickness of the pressure-sensitive adhesive was 12 μm. In this low refractive index layer-including laminate (optical laminate intermediate), the proportion of the thickness of the base layer in the total thickness was about 28%.

Further, prism-shaped asperities (asperities) were provided on the low refractive index layer-including laminate (optical laminate intermediate) in the same manner as in Example 1. At that time, the prism-shaped asperities could be provided on the acrylic base as in Example 1 without any problem even through the thickness of the acrylic base and the total thickness of the low refractive index layer-including laminate (optical laminate intermediate) were about half of those in Example 1.

(Comparative Example 1)

Prism-shaped asperities were provided on an acrylic base with a thickness of 40 μm, which was the same thickness as used in Example 1, by the same deformation method as in Example 1 without laminating other layers. As a result, the acrylic base was creased by being crumpled during the deformation treatment, whereby the prism-shaped asperities could not be provided uniformly.

Industrial Applicability

As described above, the present invention can provide a method for producing an optical laminate and an optical laminate intermediate, capable of finely providing asperities on a thin base layer at low cost. The use of the present invention is not limited to particular use, and the present invention is applicable to various image displays such as a liquid crystal display, an organic EL display, and a micro LED display, for example.

Reference Signs List

| | |
|---|---|
| 10 | Base layer |
| 11 | Undercoat layer |
| 12 | Protective layer |
| 20 | Low refractive index layer |
| 20' | Coating (Precursor layer) |
| 20" | Gel pulverized product-containing liquid |
| 21 | Low refractive index layer with improved strength |
| 22 | Intermediate layer |
| 30 | Pressure-sensitive adhesive/adhesive layer |
| 40 | Protective layer (separator) |
| 50 | Brightness enhancement film |
| 60 | Light diffusion layer |
| 70 | Polarizing plate |
| 101 | Delivery roller |
| 102 | Coating roller |
| 110 | Oven zone |
| 111 | Hot air fan (heating unit) |
| 120 | Chemical treatment zone |
| 121 | Lamp (light irradiation unit) or hot air fan (heating unit) |
| 130a | Pressure-sensitive adhesive/adhesive layer coating zone |
| 130 | Strength improving zone, Intermediate layer forming zone |
| 131a | Pressure-sensitive adhesive/adhesive layer coating unit |
| 131 | Hot air fan (heating unit) |
| 105 | Winding roller |
| 106 | Roll |
| 201 | Delivery roller |
| 202 | Solution reservoir |
| 203 | Doctor (doctor knife) |
| 204 | Micro gravure |
| 210 | Oven zone |
| 211 | Heating unit |
| 220 | Chemical treatment zone |
| 221 | Lamp (light irradiation unit) or hot air fan (heating unit) |
| 230a | Pressure-sensitive adhesive/adhesive layer coating zone |
| 230 | Strength improving zone, Intermediate layer forming zone |
| 231a | Pressure-sensitive adhesive/adhesive layer coating unit |
| 231 | Hot air fan (heating unit) |
| 251 | Winding roller |
| 252 | Roll |

## Claims

1. A method for producing an optical laminate, comprising the steps of:

   laminating an optical functional layer on a base layer (10) and laminating a pressure-sensitive adhesive/adhesive layer (30) and a protective layer (40) on the base layer via the optical functional layer in this order; and
   after the step of laminating, providing asperities on a surface of the base layer opposite to a surface on which the pressure-sensitive adhesive/adhesive layer is laminated, wherein
   the optical functional layer is a low refractive index layer (20) having a refractive index of 1.3 or less.

2. The method according to claim 1, wherein the asperities are prism-shaped asperities.

3. The method according to claim 1 or 2, wherein before the step of providing asperities, the base layer has a thickness in the range from 1 to 100 μm.

4. The method according to any one of claims 1 to 3, wherein the optical functional layer is formed using at least one method selected from the group consisting of coating (20'), transfer, sputtering, and vapor deposition.

5. The method according to any one of claims 1 to 4, wherein the optical functional layer is the low refractive index layer having a refractive index of 1.25 or less, or 1.2 or less, or 1.15 or less.

6. The method according to any one of claims 1 to 5, wherein in the step of laminating, an undercoat layer (11) is laminated on the base layer, and the optical functional layer is laminated on the undercoat layer, and wherein the undercoat layer preferably has a thickness in the range from 10 to 300 nm.

7. The method according to any one of claims 1 to 6, wherein the thickness of the base layer in an optical laminate intermediate before the step of laminating and after the step of providing asperities is 60% or less of the thickness of the entire optical laminate intermediate.

8. The method according to any one of claims 1 to 7, wherein the thickness of the optical laminate intermediate before the step of laminating and after the step of providing asperities is in the range from 40 to 200 μm.

9. The method according to any one of claims 1 to 8, wherein
   the base layer is a long base layer, and
   in the step of laminating, the layers other than the base layer are continuously formed on the base layer.

10. An optical laminate intermediate comprising:

    a base layer (10); and
    an optical functional layer being laminated on the base layer; and
    a pressure-sensitive adhesive/adhesive layer (30); and
    a protective layer (40), the pressure-sensitive adhesive/adhesive layer and the protective layer being laminated on the base layer via the optical functional layer in this order, wherein
    the optical laminate intermediate is for use in production of an optical laminate by providing asperities on a surface of the base layer opposite to a surface on which the pressure-sensitive adhesive/adhesive layer is laminated; and wherein
    the optical functional layer is a low refractive index layer (20) having a refractive index of 1.3 or less.

11. The optical laminate intermediate according to claim 10, wherein the asperities are prism-shaped asperities.

12. The optical laminate intermediate according to claim 10 or 11, wherein the base layer has a thickness in the range from 1 to 100 μm.

13. The optical laminate intermediate according to any one of claims 10 to 12, wherein the optical functional layer is the low refractive index layer having a refractive index of 1.25 or less, or 1.2 or less, or 1.15 or less.

14. The optical laminate intermediate according to any one of claims 10 to 13, wherein an undercoat layer is laminated on the base layer, and the optical functional layer is laminated on the undercoat layer, and wherein, the undercoat

layer preferably has a thickness in the range from 10 to 300 nm.

**15.** The optical laminate intermediate according to any one of claims 10 to 14, wherein the thickness of the base layer is 60% or less of the thickness of the entire optical laminate intermediate.

**16.** The optical laminate intermediate according to any one of claims 10 to 15, wherein, the thickness of the entire optical laminate intermediate is in the range from 40 to 200 μm.

## Patentansprüche

**1.** Verfahren zur Herstellung eines optischen Laminats, umfassend die Schritte:

des Laminierens einer optischen Funktionsschicht auf eine Basisschicht (10) und des Laminierens einer druckempfindlichen Klebstoff-/Klebeschicht (30) und einer Schutzschicht (40) auf die Basisschicht über die optische Funktionsschicht in dieser Reihenfolge; und
nach dem Schritt des Laminierens, des Bereitstellens von Unebenheiten auf einer Oberfläche der Basisschicht, die einer Oberfläche gegenüberliegt, auf welche die druckempfindliche Klebstoff-/Klebeschicht laminiert ist, wobei
die optische Funktionsschicht eine Schicht (20) mit niedrigem Brechungsindex ist, die einen Brechungsindex von 1,3 oder weniger aufweist.

**2.** Verfahren nach Anspruch 1, wobei die Unebenheiten prismenförmige Unebenheiten sind.

**3.** Verfahren nach Anspruch 1 oder 2, wobei die Basisschicht vor dem Schritt des Bereitstellens von Unebenheiten eine Dicke in dem Bereich von 1 bis 100 μm aufweist.

**4.** Verfahren nach einem der Ansprüche 1 bis 3, wobei die optische Funktionsschicht unter Verwendung mindestens eines Verfahrens, ausgewählt aus der Gruppe, bestehend aus Beschichten (20'), Übertragen, Sputtern und Aufdampfen gebildet wird.

**5.** Verfahren nach einem der Ansprüche 1 bis 4, wobei die optische Funktionsschicht die Schicht mit niedrigem Brechungsindex ist, die einen Brechungsindex von 1,25 oder weniger, oder 1,2 oder weniger, oder 1,15 oder weniger aufweist.

**6.** Verfahren nach einem der Ansprüche 1 bis 5, wobei in dem Schritt des Laminierens eine Grundierungsschicht (11) auf die Basisschicht laminiert wird und die optische Funktionsschicht auf die Grundierungsschicht laminiert wird, und wobei die Grundierungsschicht bevorzugt eine Dicke in dem Bereich von 10 bis 300 nm aufweist.

**7.** Verfahren nach einem der Ansprüche 1 bis 6, wobei die Dicke der Basisschicht in einem optischen Laminat-Zwischenprodukt vor dem Schritt des Laminierens und nach dem Schritt des Bereitstellens von Unebenheiten 60% oder weniger der Dicke des gesamten optischen Laminat-Zwischenprodukts beträgt.

**8.** Verfahren nach einem der Ansprüche 1 bis 7, wobei die Dicke des optischen Laminat-Zwischenprodukts vor dem Schritt des Laminierens und nach dem Schritt des Bereitstellens von Unebenheiten in dem Bereich von 40 bis 200 μm liegt.

**9.** Verfahren nach einem der Ansprüche 1 bis 8, wobei
die Basisschicht eine lange Basisschicht ist, und
in dem Schritt des Laminierens die anderen Schichten als die Basisschicht kontinuierlich auf der Basisschicht ausgebildet sind.

**10.** Optisches Laminat-Zwischenprodukt, umfassend:

eine Basisschicht (10); und
eine optische Funktionsschicht, die auf die Basisschicht laminiert ist; und
eine druckempfindliche Klebstoff-/Klebeschicht (30); und
eine Schutzschicht (40),

wobei die druckempfindliche Klebstoff-/Klebeschicht und die Schutzschicht über die optische Funktionsschicht in dieser Reihenfolge auf die Basisschicht laminiert sind, wobei
das optische Laminat-Zwischenprodukt zur Verwendung bei der Herstellung eines optischen Laminats dient, indem Unebenheiten auf einer Oberfläche der Basisschicht bereitgestellt werden, die einer Oberfläche gegenüberliegt, auf welche die druckempfindliche Klebstoff-/Klebeschicht laminiert ist; und wobei
die optische Funktionsschicht eine Schicht (20) mit niedrigem Brechungsindex ist, die einen Brechungsindex von 1,3 oder weniger aufweist.

**11.** Optisches Laminat-Zwischenprodukt nach Anspruch 10, wobei die Unebenheiten prismenförmige Unebenheiten sind.

**12.** Optisches Laminat-Zwischenprodukt nach Anspruch 10 oder 11, wobei die Basisschicht eine Dicke in dem Bereich von 1 bis 100 μm aufweist.

**13.** Optisches Laminat-Zwischenprodukt nach einem der Ansprüche 10 bis 12, wobei die optische Funktionsschicht die Schicht mit niedrigem Brechungsindex ist, die einen Brechungsindex von 1,25 oder weniger, oder 1,2 oder weniger, oder 1,15 oder weniger aufweist.

**14.** Optisches Laminat-Zwischenprodukt nach einem der Ansprüche 10 bis 13, wobei eine Grundierungsschicht auf die Basisschicht laminiert ist und die optische Funktionsschicht auf die Grundierungsschicht laminiert ist, und wobei die Grundierungsschicht bevorzugt eine Dicke in dem Bereich von 10 bis 300 nm aufweist.

**15.** Optisches Laminat-Zwischenprodukt nach einem der Ansprüche 10 bis 14, wobei die Dicke der Basisschicht 60 % oder weniger der Dicke des gesamten optischen Laminat-Zwischenprodukts beträgt.

**16.** Optisches Laminat-Zwischenprodukt nach einem der Ansprüche 10 bis 15, wobei die Dicke des gesamten optischen Laminat-Zwischenprodukts in dem Bereich von 40 bis 200 μm liegt.

## Revendications

**1.** Procédé de production d'un stratifié optique, comprenant les étapes consistant à :

stratifier une couche fonctionnelle optique sur une couche de base (10) et stratifier une couche d'adhésif sensible à la pression/adhésif (30) et une couche protectrice (40) sur la couche de base via la couche fonctionnelle optique dans cet ordre ; et
après l'étape de stratification, créer des aspérités sur une surface de la couche de base opposée à une surface sur laquelle la couche d'adhésif sensible à la pression/adhésif est stratifiée, dans lequel
la couche fonctionnelle optique est une couche à faible indice de réfraction (20) présentant un indice de réfraction de 1,3 ou moins.

**2.** Procédé selon la revendication 1, dans lequel les aspérités sont des aspérités en forme de prisme.

**3.** Procédé selon la revendication 1 ou 2, dans lequel avant l'étape de création d'aspérités, la couche de base présente une épaisseur dans la plage de 1 à 100 μm.

**4.** Procédé selon l'une quelconque des revendications 1 à 3, dans lequel la couche fonctionnelle optique est formée en utilisant au moins un procédé choisi dans le groupe constitué du revêtement (20'), du transfert, de la pulvérisation et du dépôt en phase vapeur.

**5.** Procédé selon l'une quelconque des revendications 1 à 4, dans lequel la couche fonctionnelle optique est la couche à faible indice de réfraction présentant un indice de réfraction de 1,25 ou moins, ou 1,2 ou moins, ou 1,15 ou moins.

**6.** Procédé selon l'une quelconque des revendications 1 à 5, dans lequel dans l'étape de stratification, une couche formant sous-couche (11) est stratifiée sur la couche de base, et la couche fonctionnelle optique est stratifiée sur la couche formant sous-couche, et dans lequel la couche formant sous-couche présente de préférence une épaisseur dans la plage de 10 à 300 nm.

**7.** Procédé selon l'une quelconque des revendications 1 à 6, dans lequel l'épaisseur de la couche de base dans un intermédiaire de stratifié optique avant l'étape de stratification et après l'étape de création d'aspérités est inférieure ou égale à 60 % de l'épaisseur de l'intermédiaire de stratifié optique entier.

**8.** Procédé selon l'une quelconque des revendications 1 à 7, dans lequel l'épaisseur de l'intermédiaire de stratifié optique avant l'étape de stratification et après l'étape de création d'aspérités est dans la plage de 40 à 200 μm.

**9.** Procédé selon l'une quelconque des revendications 1 à 8, dans lequel
la couche de base est une couche de base longue, et
dans l'étape de stratification, les couches autres que la couche de base sont formées en continu sur la couche de base.

**10.** Intermédiaire de stratifié optique comprenant :

une couche de base (10) ; et
une couche fonctionnelle optique étant stratifiée sur la couche de base ; et
une couche d'adhésif sensible à la pression/adhésif (30) ; et
une couche protectrice (40),
la couche d'adhésif sensible à la pression/adhésif et la couche protectrice étant stratifiées sur la couche de base via la couche fonctionnelle optique dans cet ordre, dans lequel
l'intermédiaire de stratifié optique est destiné à être utilisé dans la production d'un stratifié optique en créant des aspérités sur une surface de la couche de base opposée à une surface sur laquelle la couche d'adhésif sensible à la pression/adhésif est stratifiée ; et dans lequel
la couche fonctionnelle optique est une couche à faible indice de réfraction (20) présentant un indice de réfraction de 1,3 ou moins.

**11.** Intermédiaire de stratifié optique selon la revendication 10, dans lequel les aspérités sont des aspérités en forme de prisme.

**12.** Intermédiaire de stratifié optique selon la revendication 10 ou 11, dans lequel la couche de base présente une épaisseur dans la plage de 1 à 100 μm.

**13.** Intermédiaire de stratifié optique selon l'une quelconque des revendications 10 à 12, dans lequel la couche fonctionnelle optique est la couche à faible indice de réfraction présentant un indice de réfraction de 1,25 ou moins, ou 1,2 ou moins, ou 1,15 ou moins.

**14.** Intermédiaire de stratifié optique selon l'une quelconque des revendications 10 à 13, dans lequel une couche formant sous-couche est stratifiée sur la couche de base, et la couche fonctionnelle optique est stratifiée sur la couche formant sous-couche, et dans lequel la couche formant sous-couche présente de préférence une épaisseur dans la plage de 10 à 300 nm.

**15.** Intermédiaire de stratifié optique selon l'une quelconque des revendications 10 à 14, dans lequel l'épaisseur de la couche de base est inférieure ou égale à 60% de l'épaisseur de l'intermédiaire de stratifié optique entier.

**16.** Intermédiaire de stratifié optique selon l'une quelconque des revendications 10 à 15, dans lequel l'épaisseur de l'intermédiaire de stratifié optique entier est dans la plage de 40 à 200 μm.

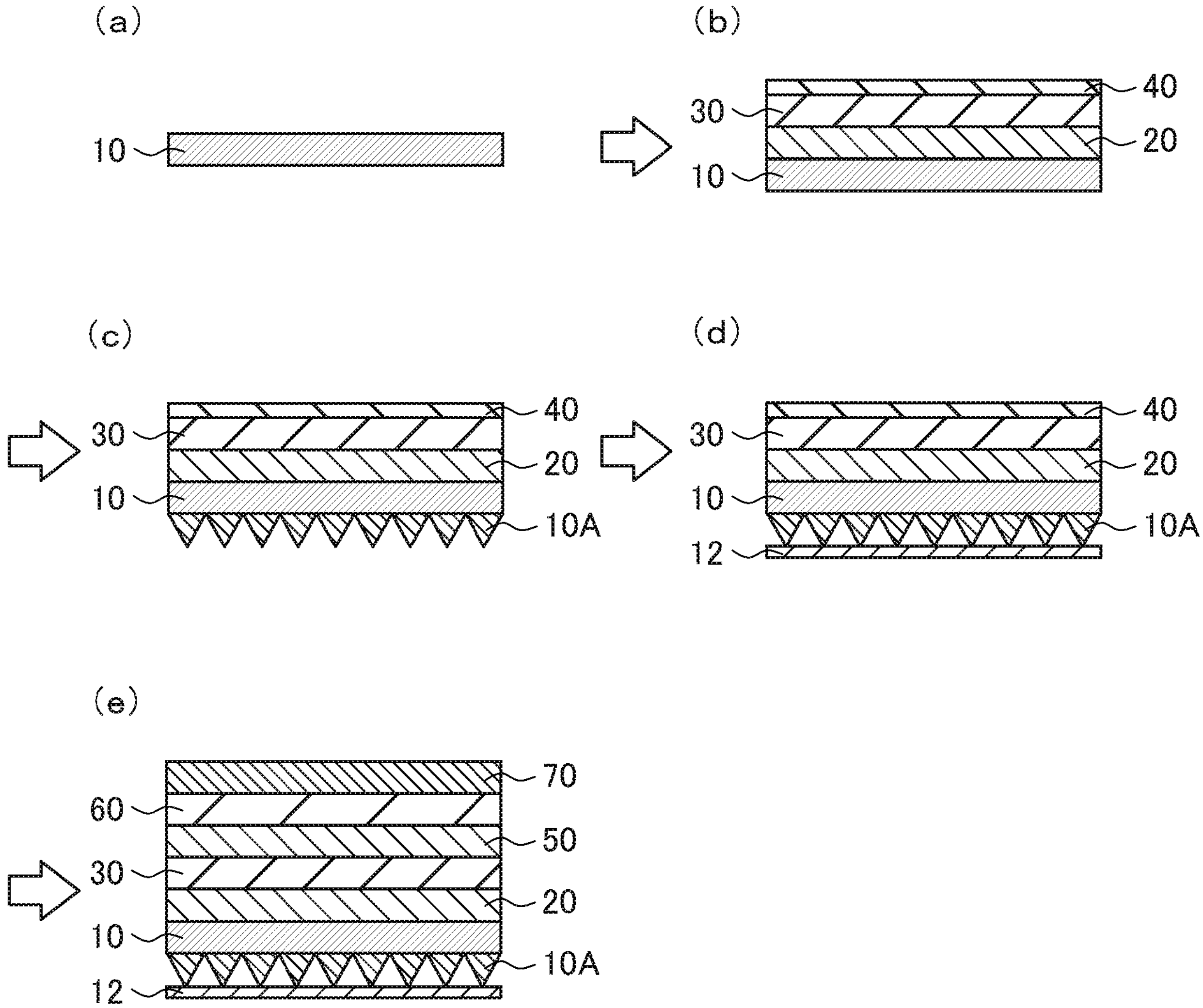
(a)
10
(b)
40
30
20
10
(c)
40
30
20
10
10A
(d)
40
30
20
10
10A
12
(e)
70
60
50
30
20
10
10A
12

FIG. 1

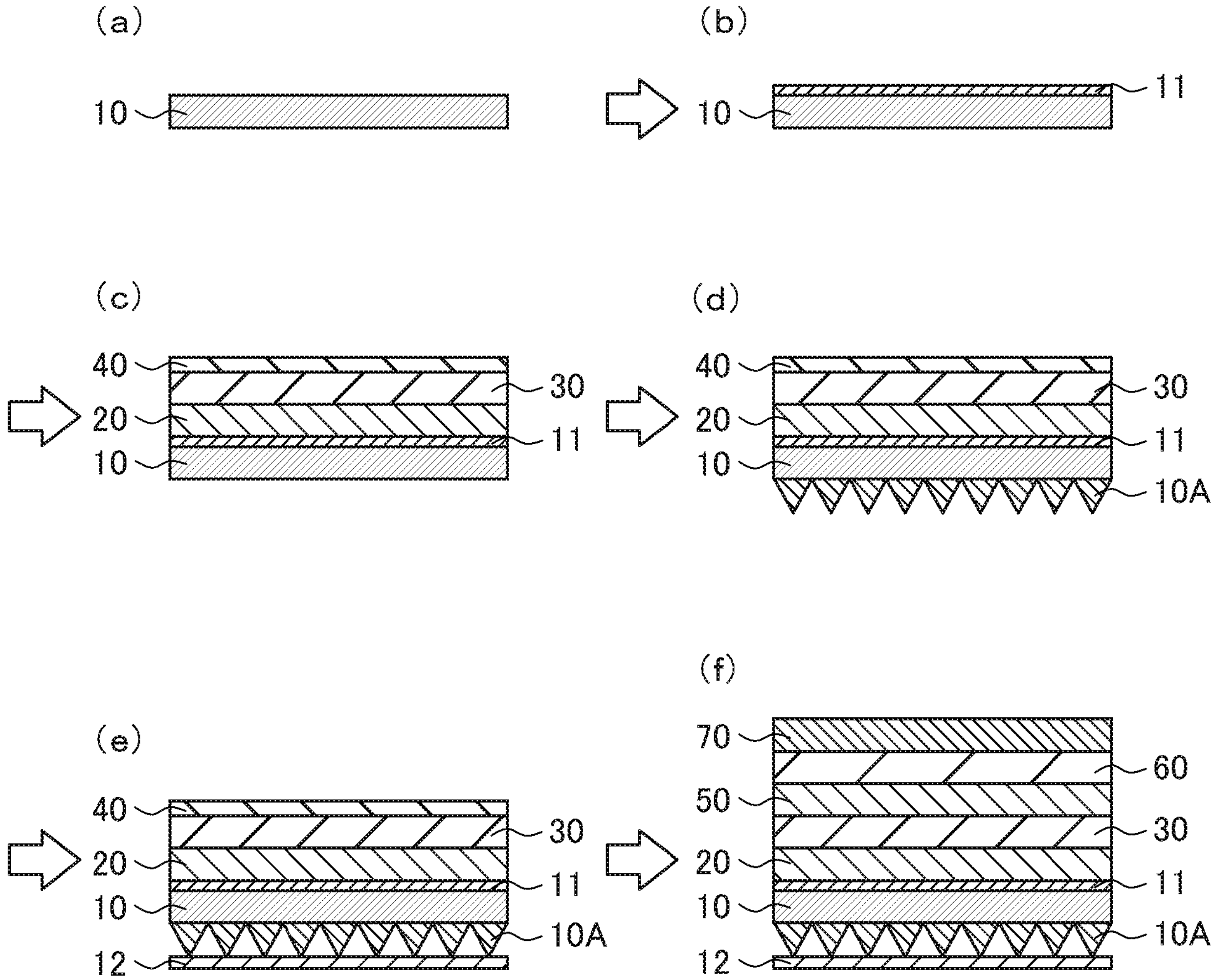
(a)
10
(b)
10
11
(c)
40
20
10
30
11
(d)
40
20
10
30
11
10A
(e)
40
20
10
12
30
11
10A
(f)
70
50
20
10
12
60
30
11
10A

FIG. 2

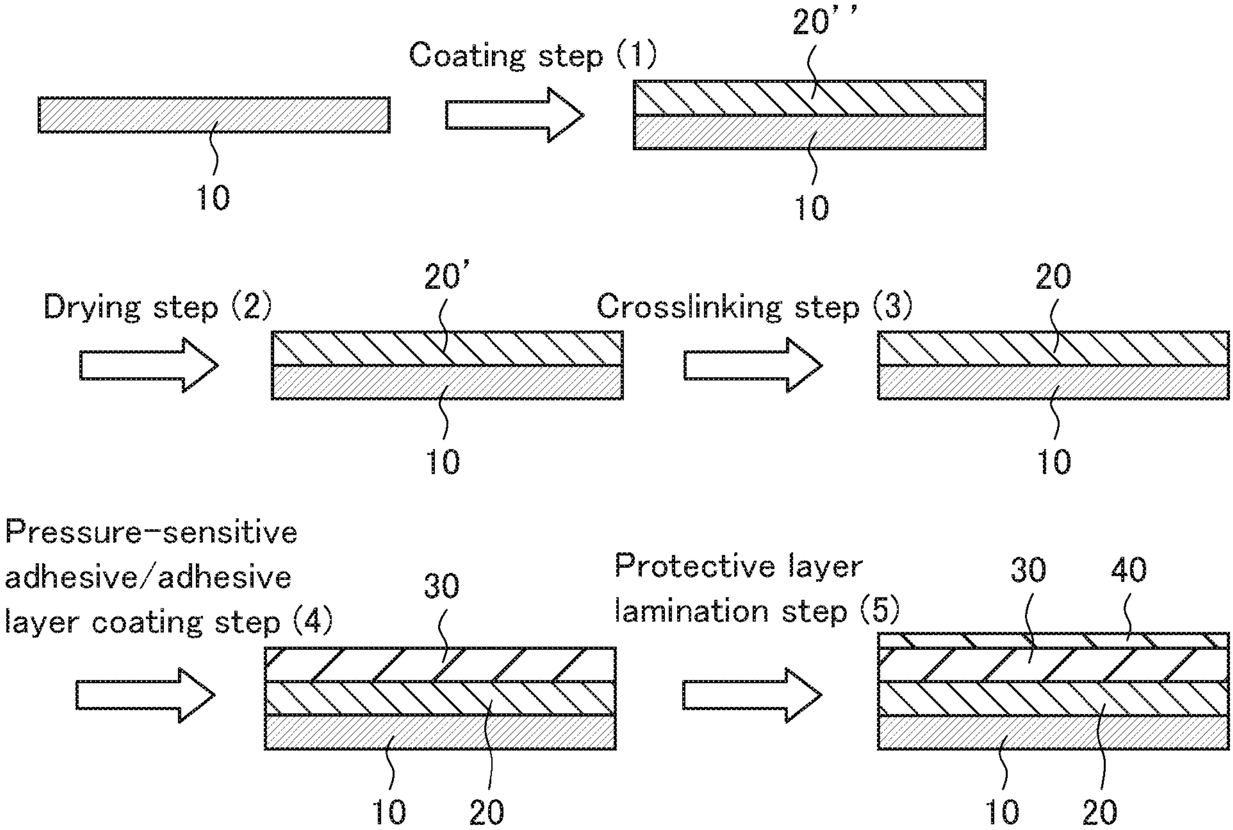
Coating step (1)
20''
10
10
Drying step (2)
20'
10
Crosslinking step (3)
20
10
Pressure-sensitive
adhesive/adhesive
layer coating step (4)
30
10
20
Protective layer
lamination step (5)
30
40
10
20

FIG. 3

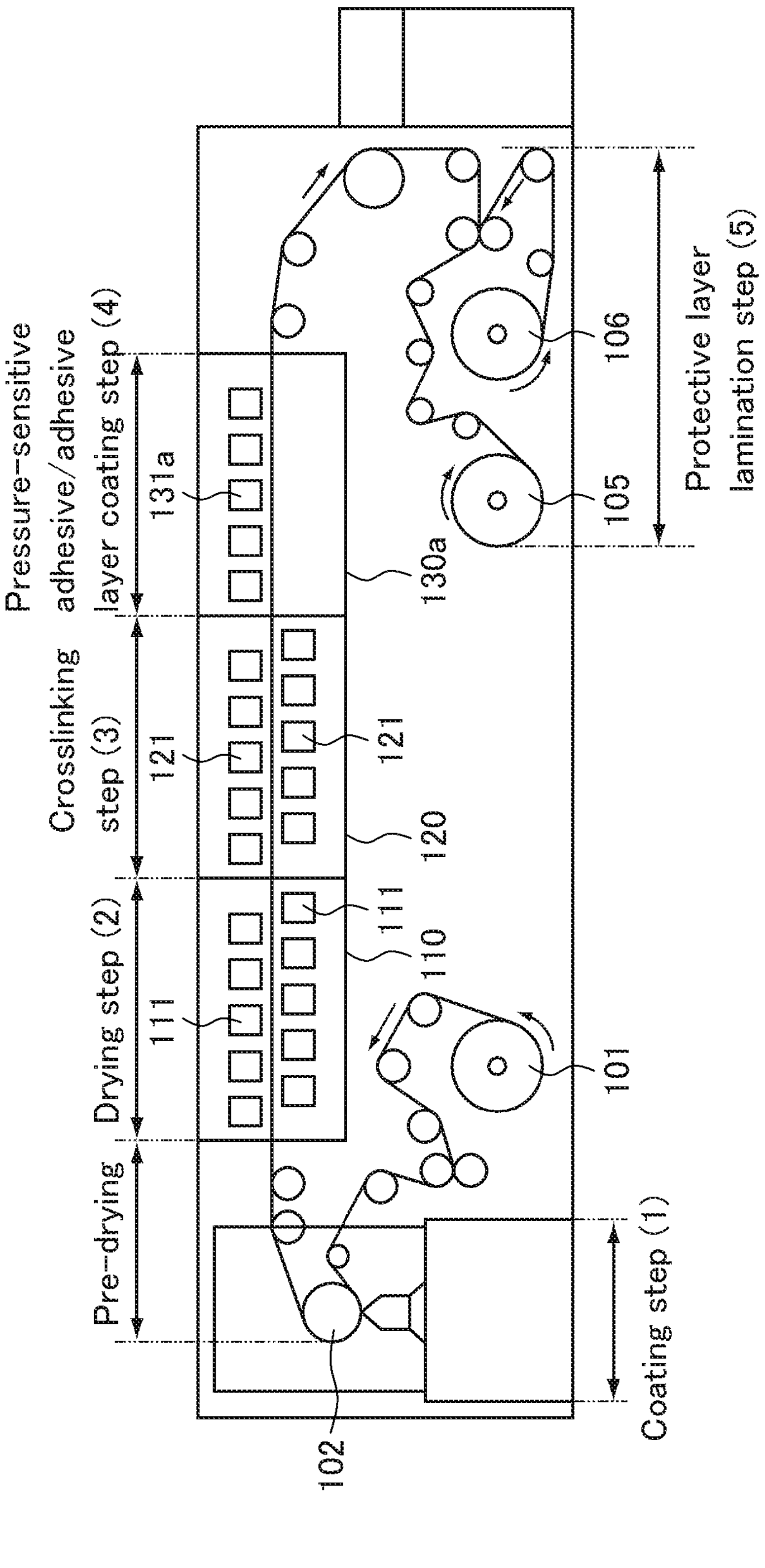
Pre-drying
Drying step (2)
Crosslinking step (3)
Pressure-sensitive adhesive/adhesive layer coating step (4)
Coating step (1)
Protective layer lamination step (5)
101
102
105
106
110
111
111
111
120
121
121
130a
131a

FIG. 4

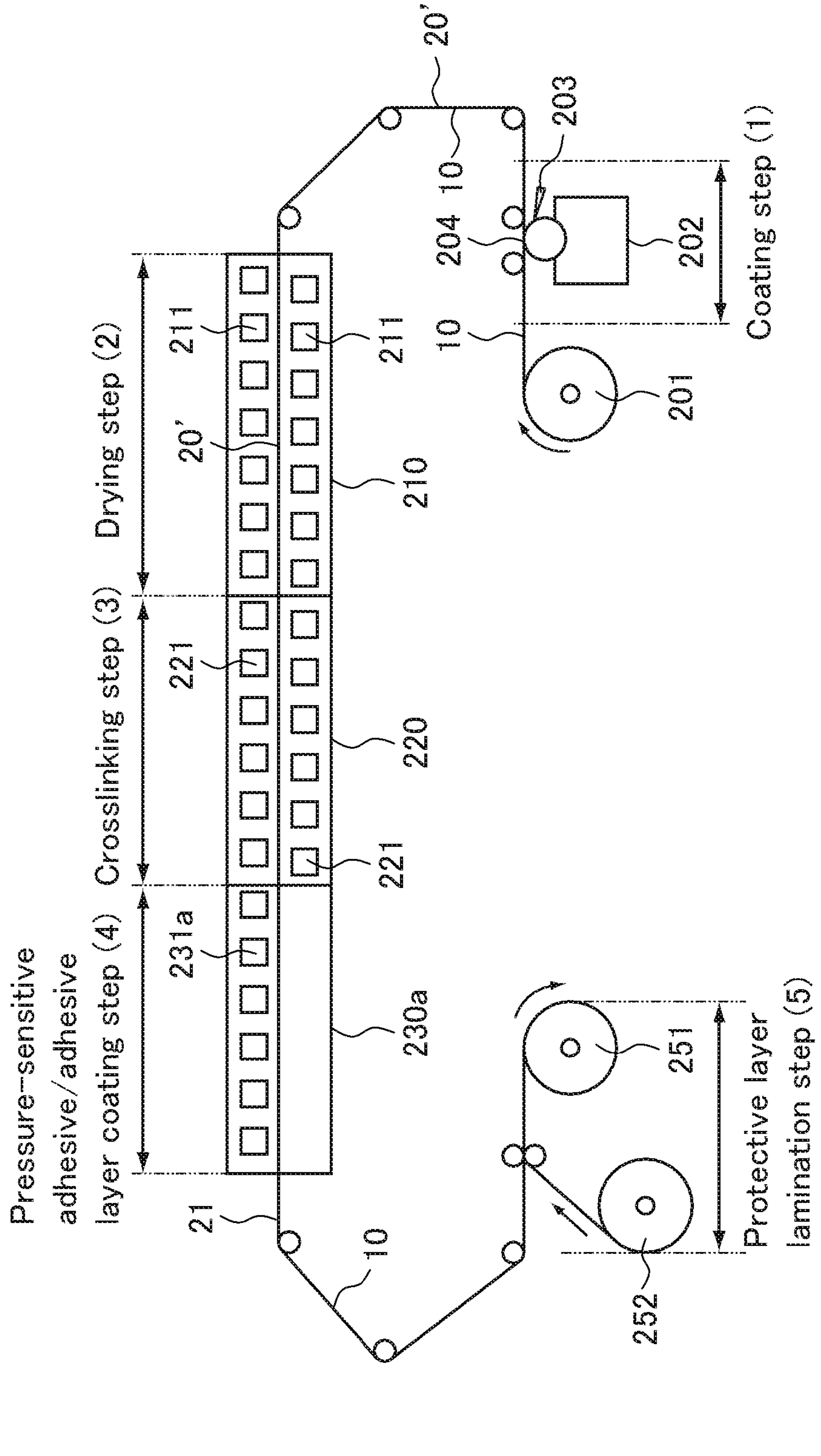
Pressure-sensitive adhesive/adhesive layer coating step (4)
Crosslinking step (3)
Drying step (2)
Coating step (1)
Protective layer lamination step (5)
20''
203
204
10
202
201
211
20'
210
221
220
231a
230a
21
251
252

FIG. 5

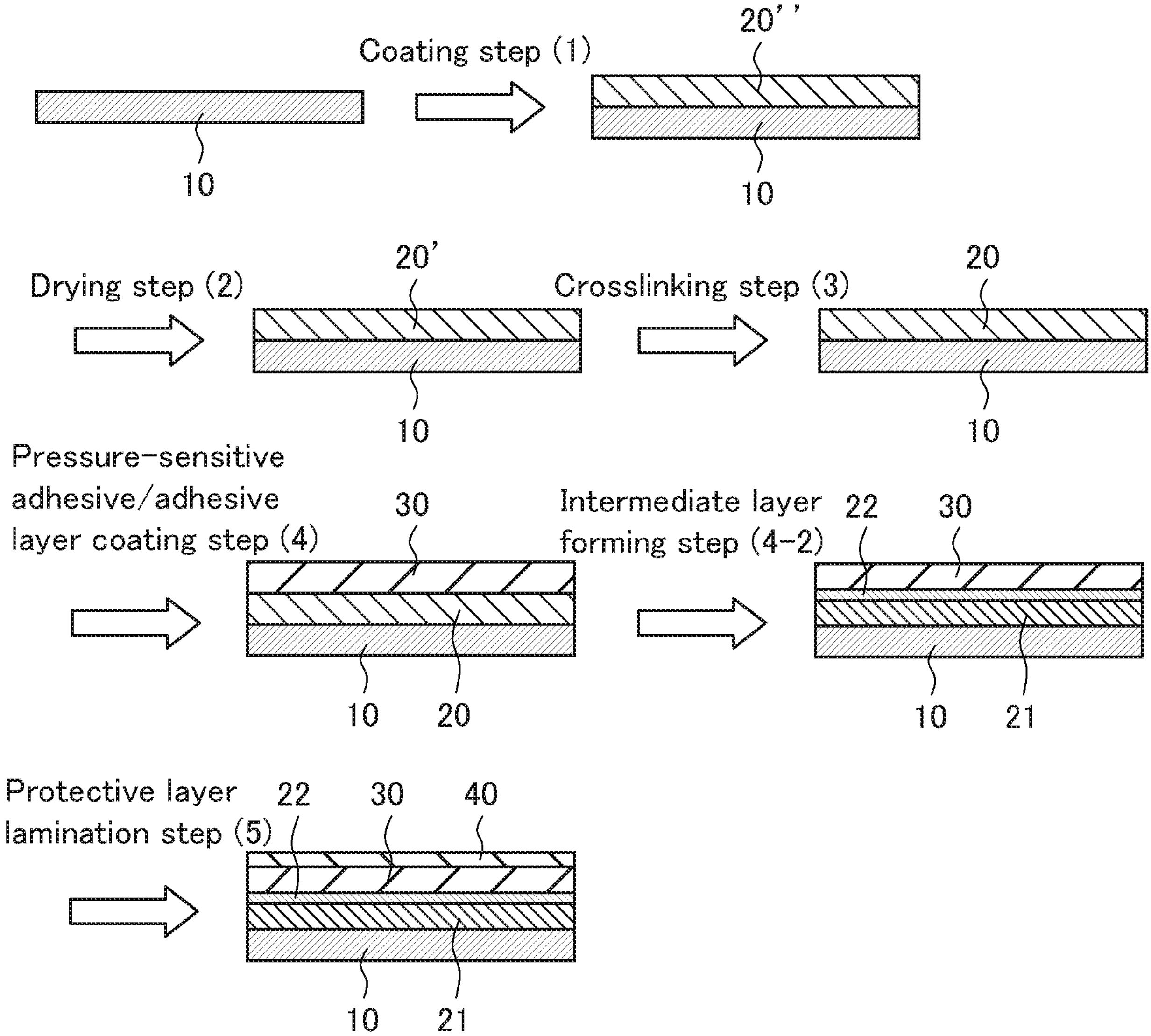
Coating step (1)
20''
10
10
Drying step (2)
20'
Crosslinking step (3)
20
10
10
Pressure-sensitive adhesive/adhesive layer coating step (4)
30
10
20
Intermediate layer forming step (4-2)
22
30
10
21
Protective layer lamination step (5)
22
30
40
10
21

FIG. 6

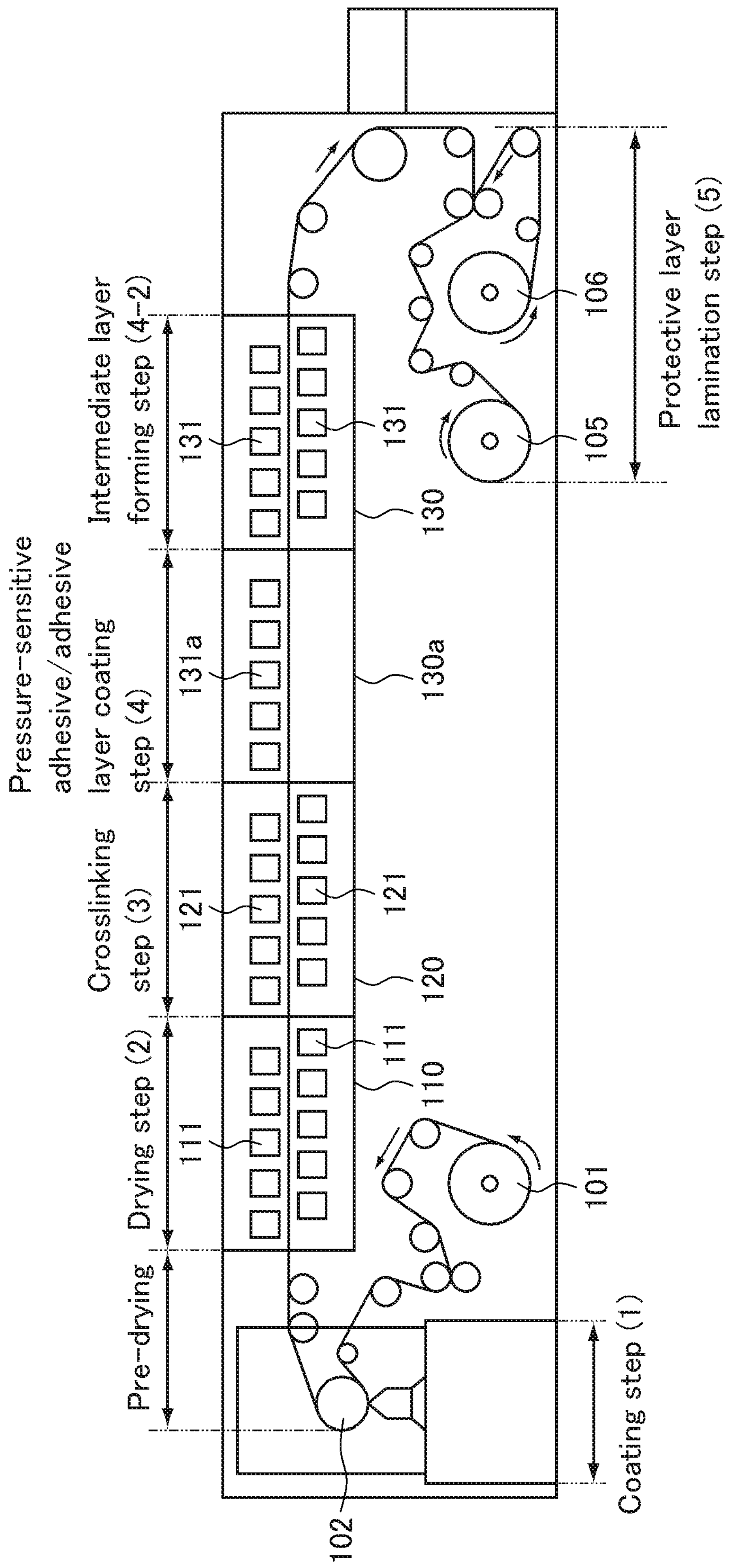
Pre-drying
Drying step (2)
Crosslinking step (3)
Pressure-sensitive adhesive/adhesive layer coating step (4)
Intermediate layer forming step (4-2)
Protective layer lamination step (5)
Coating step (1)
101
102
105
106
110
111
111
111
120
121
121
121
130
130a
131
131
131a

FIG. 7

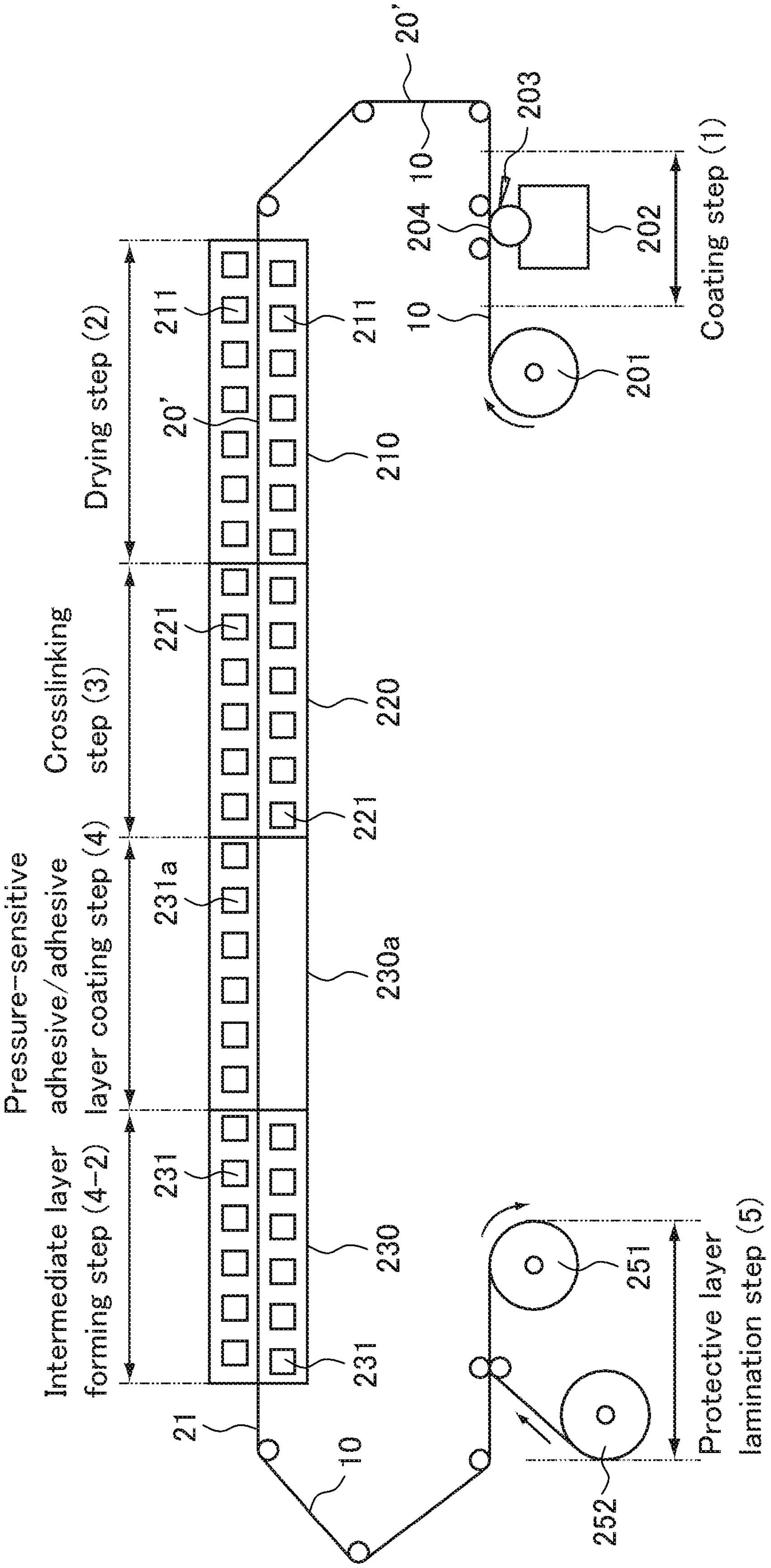
Intermediate layer forming step (4-2)
Pressure-sensitive adhesive/adhesive layer coating step (4)
Crosslinking step (3)
Drying step (2)
Coating step (1)
Protective layer lamination step (5)
21
10
231
230
231a
230a
221
220
211
210
20'
20''
203
204
202
201
251
252

FIG. 8

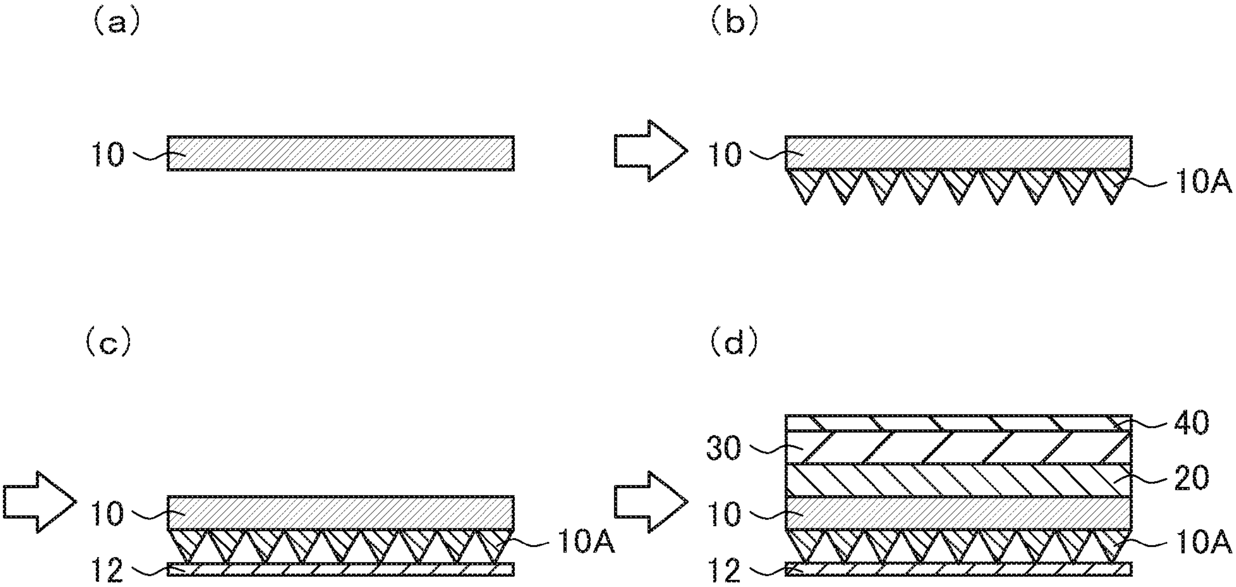


FIG. 9

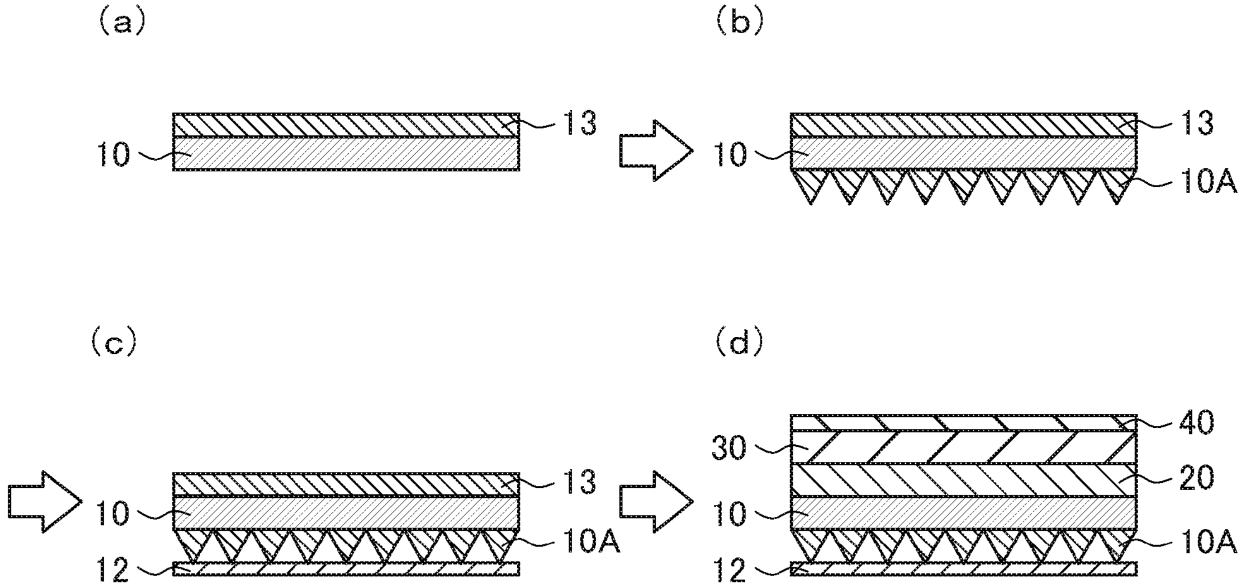


FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011123476 A
- JP 2013235259 A
- JP 2015200865 A
- JP 2015200866 A
- JP 2015173066 A
- JP H1184111 A